# EUROPÄISCHE PATENTSCHRIFT

(11) **EP 2 806 773 B1**
(45) Veröffentlichungstag und Bekanntmachung des Hinweises auf die Patenterteilung: **21.09.2016**
(21) Anmeldenummer: 13702321.4
(22) Anmeldetag: 25.01.2013
(51) Int. Cl.: A47J 31/36, A47J 31/40, A23F 5/26

(54) **BRÜHMODUL**
BREWING MODULE
MODULE D'INFUSION

(30) Priorität: 25.01.2012 EP 12405010
(43) Veröffentlichungstag der Anmeldung: 03.12.2014
(73) Patentinhaber: Qbo Coffee GmbH, 8304 Wallisellen (CH)
(72) Erfinder: DEUBER, Louis, 8805 Richterswil (CH)
(74) Vertreter: Frei Patent Attorneys
(86) Internationale Anmeldenummer: PCT/CH2013/000014
(87) Internationale Veröffentlichungsnummer: WO 2013/110206

(56) Entgegenhaltungen:
- EP-A1- 1 495 702
- WO-A1-95/17121
- WO-A1-2008/004116
- WO-A1-2012/045184
- FR-A1- 2 723 524

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät sowie ein Extraktionsgerät mit einem solchen Brühmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel in das Brühmodul eingelegt und die Brühkammer bspw. mittels eines Bedienhebels verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet.

Die Veröffentlichungen EP 1'721'553, EP 1'646'305, EP 1 495 702, WO 2008/004116 und WO 2008/014830 zeigen Beispiele von Geräten mit horizontalen Brühkammern. Alle diese Geräte sind zur für Kapseln bestimmt, die um die horizontale Achse rotationssymmetrisch sind. Die Kapsel wird in eine Zwischenposition eingelegt, in welcher ein umlaufender Kragen der Kapsel durch eigens dafür vorgesehene Haltemittel - bspw. seitlich der Kapsel angeordnete Schwenkarme - gehalten wird. Anschliessend werden die zwei Brühkammerteile relativ zueinander verschoben, um die Kapsel in eine Brühkammer einzuschieben. Dadurch wird die Kapsel von der Zwischenposition in eine Brühposition geschoben, wobei auch die Verbindung zwischen den Haltemitteln und dem Kragen gelöst wird. Nach dem Brühvorgang wird die Brühkammer geöffnet, und die Kapsel fällt - nicht mehr durch die Haltemittel gehalten - in den Kapselbehälter.

Auch wenn sich die Konzepte der vorstehenden Schriften teilweise unterscheiden (horizontale Verschiebung oder Kippbewegung zwischen erster und zweiter Position, Form der Kapsel etc.), ist ihnen doch gemeinsam, dass für das Halten in der Zwischenposition und/oder das Führen in die Auswurfposition der umlaufende Kragen der Kapsel sowie eigens dafür vorgesehene Haltemittel benötigt werden. Das hat den Nachteil, dass es wenige Freiheitsgrade bei der Ausgestaltung der Kapsel gibt; ausserdem müssen Brühkammer und Halte- und Lösemechanismen relativ kompliziert und daher aufwändig gestaltet werden.

WO 2005/060801, WO 2007/016977 und US 6,182,554 zeigen Brühmodule bei denen die Kapsel in einen Kapselhalter mit einer Kavität einzuwerfen ist, wobei die Kavität in ihrer Form und ihrem Volumen genau auf die Kapsel abgestimmt ist.

Beim Verschliessen der Brühkammer wird der Kapselhalter verschwenkt, und ein Verschlussteil wird gegen Kapselhalter und Kapsel gedrückt, wobei ein Anstechen der Kapsel erfolgt. Auch bei diesen Lösungen haben der umlaufende Kragen der Kapsel sowie deren Becherform eine zentrale Funktion. Der Kragen wird für das Abdichten der Injektionsseite gegen die Extraktionsseite zwingend benötigt, und die Becherform ist eine Voraussetzung für die einfache Bedienbarkeit bei diesen Lösungen. Auch die und WO 2010/043451 zeigt ein Brühmodul, bei welchem die Kapsel nach ihrem Einwurf am Kragen geführt in einer Zwischenposition gehalten wird.

In der WO 2010/118545 wird ein Brühmodul vorgestellt, welches ein erstes Brühmodulteil und ein relativ zum ersten Brühmodulteil linear verschiebbares zweites Brühmodulteil aufweist, wobei das erste Brühmodulteil eine Kapselaufnahme mit einer Auflage und einer seitlichen Führung bildet. Die Kapsel wird vor dem Verschliessen der Brühkammer eingeworfen, dass sie von der seitlichen Führung geführt direkt auf der Auflage aufliegt, wobei nach dem Verschliessen der Brühkammer die Auflage und deren seitliche Führung einen Teil der Brühkammer bilden; d.h. der Einwurf erfolgt direkt in einen Teil der Brühkammer hinein. Diese Lösung hat unter anderem den Vorteil, dass sie eine sehr kompakte Bauart mit kleinen Verschiebungswegen ermöglicht, dass die Kapselform fast beliebig wählbar ist und dass der umlaufende Kragen der Kapsel optional und nicht notwendig ist. Bei Brühsystemen, die mit hohem Brühdruck arbeiten, sind jedoch geeignete Dichtungssysteme, die ein Vorbeifliessen der in die Kapsel eingeleiteten Brühflüssigkeit an der Kapsel vorbei zuverlässig verhindern, schwierig unterzubringen.

Die Schrift FR 2 723 524 zeigt eine Kaffeemaschine zum Zubereiten von Kaffee mittels "Pods" (flachen Portionspackungen, in denen das Extraktionsgut in wasserdurchlässigem Filtermaterial gehalten wird und die nicht angestochen werden müssen). Gemäss FR 2 723 524 werden die Pods nach dem Einwerfen und vor dem Verschliessen der Brühkammer durch ein wegkippbares Element gehalten. Damit der Pod in der vorgesehenen aufrechten Position bleibt, muss er entlang des seitlichen Kragens geführt bleiben, bis sich die Brühkammer schliesst. WO 95 17121 zeigt - ebenfalls für Pods - eine vergleichbare Lösung mit einem linear in axialer Richtung verschiebbaren Auflageelement.

Die nach dem Prioritätstag der vorliegenden Anmeldung veröffentlichte WO 2012/045184 zeigt ein Extraktionsgerät mit einem Brühmodul, welches eine die Kapsel umgreifende Dichtung aufweist. In Ausführungsformen ist ausserdem eine bewegbare und nach unten schwenkbare Kapselauflage vorhanden.

Ausgehend vom Stand der Technik stellt sich der Erfindung die Aufgabe, ein Brühmodul für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, zur Verfügung zu stellen, das Nachteile bestehender Brühmodule überwindet und das eine einfache und kompakte Bauweise sowie eine grosse Flexibilität beim Kapseldesign ermöglicht. Das Brühmodul sollte insbesondere für einen horizontalen Einbau und vorzugsweise auch für grosse Brühdrücke von über 10 bar, bspw. bis 20 bar, geeignet sein.

Das Brühmodul weist ein erstes Brühmodulteil und ein relativ zu diesem bewegbares zweites Brühmodulteil auf, wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die Kapsel bilden. In einer geschlossenen Stellung (das erste und zweite Brühmodulteil sind bspw. "zusammen") wird eine Brühkammer geschlossen, welche die Kapsel beim Brühvorgang mindestens teilweise umgibt.

Weiter weist das Brühmodul ein Auflageelement auf. Das Auflageelement ist so ausgebildet, das es in einer Auflagestellung bei offener Brühkammer eine über die definierte Einwurfposition eingeworfene Kapsel auffängt, so dass die Kapsel nach ihrem Einwurf auf dem Auflageelement aufliegt. Durch Verschliessen der Brühkammer wird das Auflageelement von der Auflagestellung weg in eine Ruhestellung verschoben, wobei die Kapsel gleichzeitig von einem Greifelement des ersten Brühmodulteils und/oder des zweiten Brühmodulteils gehalten wird, und wobei die Bewegung von der Auflagestellung in die Ruhestellung in einer Richtung erfolgt, die von der Bewegungsrichtung des zweiten Brühmodulteils relativ zum ersten Brühmodulteil beim Verschliessen der Brühkammer verschieden ist. Die Bewegung erfolgt bspw. als Schwenkbewegung nach unten oder in Bezug auf die axiale Richtung in eine seitliche Richtung.

In bekannten horizontalen Brühmodulen wird die Kapsel nach dem Einwurf in einer Zwischenposition gehalten, indem der umlaufende Kragen der Kapsel in einem Führungsschlitz geführt wird. Dabei wird durch die Mittel, in denen der Führungsschlitz ausgebildet ist, einerseits das Gewicht der Kapsel gehalten. Andererseits muss der Führungsschlitz auch das Drehmoment aufnehmen, welches entsteht, weil der umlaufende Kragen nicht im Bereich des Kapselschwerpunkts sondern an dessen einen Ende (bezogen auf die axiale, ungefähr horizontale Richtung) liegt. Aus diesem Grund wird im Stand der Technik der umlaufende Kragen nicht nur für die Dichtung benötigt, sondern ist auch unabdingbar für das Halten in der Zwischenposition nach dem Einwurf der Kapsel und vor dem Verschliessen der Brühkammer.

Im Unterschied zum bekannten Stand der Technik wird beim erfindungsgemässen, im Allgemeinen horizontalen Brühmodul die Kapsel nach dem Einwurf in der offenen Stellung der Brühkammer nicht einfach am umlaufenden Kragen gehalten, sondern sie liegt einerseits auf dem Auflageelement und andererseits auf einer Auflagepartie des ersten Brühmodulteils auf. Das Auflageelement bildet dabei eine Unterlage, die unter dem eigentlichen Kapselkörper zu liegen kommt. Das Auflageelement bildet -zusammen mit der Auflagepartie des ersten Brühmodulteilseine Auflage, die den Schwerpunkt der Kapsel stützt, d.h. im geöffneten Zustand des Brühmoduls liegt die Kapsel vollständig auf der Auflage auf, ohne dass wie beim Stand der Technik Führungsmittel ein Drehmoment aufnehmen müssten (d.h. das Brühmodul kann frei von nach dem Kapseleinwurf ein Drehmoment der ruhenden Kapsel aufnehmenden Führungsmitteln, bspw. Führungsnuten etc., sein). Die Kapsel ruht vor dem Verschliessen der Brühkammer auf der von Auflageelement und Auflagepartie gebildeten Auflage an der durch den Einwurf definierten Position im Gleichgewicht, derart, dass kein mögliches Drehmoment durch Führungsmittel aufgenommen werden muss, damit die Kapsel nicht wegkippt. Aus diesen Gründen können auch Kapseln ohne den steifen umlaufenden Kragen verwendet werden.

In der offenen Stellung der Brühkammer kann die Kapsel an einer in Bezug auf die axiale Richtung peripheren Stelle auf dem Auflageelement und auf der gegenüberliegenden Seite auf einer Auflagepartie des Brühmoduls aufliegen. Der Auflageschwerpunkt auf dem Auflageelement kann bspw. um mindestens 10% der axialen Ausdehnung von beiden axialen Enden der Kapsel entfernt liegen. Der Auflageschwerpunkt auf der Auflage als Ganzer (d.h. der Auflage aus Auflageelement und Auflagepartie des Brühmodulteils) ist z.B. ungefähr in der Mitte der Kapsel und bspw. mindestens 30% von beiden axialen Enden der Kapsel entfernt.

Zwischen Auflageelement und Auflagepartie kann optional ein leerer Zwischenraum vorhanden sein. Vorteilhaft ist auf jeden Fall, dass Auflageelement und Auflagepartie zwei Auflageorte an unterschiedlichen axialen Positionen bilden.

Das Auflageelement kann sich ausserdem über die ganze Breite der Kapsel erstrecken, sodass durch Auflageelement und Auflagepartie die Orientierung der Kapsel vollständig definiert wird.

Alternativ dazu kann das Auflageelement auch nur einen Teil der Breite der Kapsel unterstützen. Gemäss einem Ausführungsbeispiel weist das Auflageelement zwei Auflageelement-Teile auf, die je von einer Seite her einen Bereich der Kapsel untergreifen.

Die auf dem Auflageelement aufliegende Partie der Kapsel ist bspw. flächig ausgebildet, d.h. sie bildet einen Teil der Kapselwand, die das Kapselinnere (mit dem Extraktionsgut gefüllt) und das Kapseläussere trennt. Durch das Auflageelement wird bspw. die Kapselwand gegen ein Kapselinneres gedrückt. Dass die Kapselwand gegen ein Kapselinneres gedrückt wird, bedeutet dass am Ort des Auflageelementes keine in sich dimensionsstabile Versteifung und kein stützendes Gegenelement vorhanden ist, sondern dass die Kapselwand durch das Auflageelement vielmehr quasi gegen die Kapselfüllung gedrückt wird.

Insbesondere kann das Auflageelement so ausgebildet sein, dass auch eine kragenfreie, bspw. würfelförmige oder zylindrische oder konische, Kapsel durch die Auflage gehalten wird.

Die bei Verwendung einer zylindrischen oder konischen Kapsel unvermeidliche umlaufende Schweissnaht kann bspw. auf der Auflagepartie aufliegen, wobei deren Position dann entsprechend angepasst ist.

Wie bereits erwähnt wird durch das Verschliessen der Brühkammer das Auflageelement von der Auflagestellung weg in eine Ruhestellung verschoben. Dabei kann das Auflageelement insbesondere einer Bewegung nach unten unterworfen sein. Beispielsweise kann das Auflageelement als Bügel ausgeformt sein, der eine Auflagepartie ausbildet und der um eine Schwenkachse so schwenkbar ist, dass bei einer Schwenkbewegung die Auflagepartie von der Kapsel nach unten weg bewegt wird (bzw., beim Öffnen der Brühkammer, in die umgekehrte Richtung).

Das Auflageelement kann in einer Ausführungsform auch mehrteilig, insbesondere durch mehrere in dieselbe oder verschiedene Richtungen bewegliche Auflageelement-Teile, ausgebildet sein.

Auch eine Schwenkbewegung zur Seite hin oder eine Translationsbewegung, bspw. schräg nach unten, sind denkbar. Im Falle eines mehrteiligen Auflageelements können bspw. zwei Auflageelement-Teile in verschiedene Richtungen, z.B. je zu einer Seite hin verschwenkbar sein.

Der Umstand, dass die Bewegung zur Ruhestellung hin in einer von der Bewegung des zweiten Brühmodulteils relativ zum ersten Brühmodulteil verschiedenen Richtung erfolgt, ermöglicht eine kompakte Anordnung kombiniert mit einer funktionsfähigen Kapseldichtung. Es hat sich gezeigt, dass im Gegensatz zu einer Verschiebebewegung in Bewegungsrichtung des zweiten Brühmodulteils auch auf Seiten des ersten Brühmodulteils Dichtungsmittel zum Abdichten der angestochenen Kapsel beim Brühvorgang so platziert werden können, dass sie bewirken, dass die aus der Kapsel ausgeleitete Brühflüssigkeit vollständig in die Ausleitvorrichtung gelangt (und nicht bspw. nach unten tropft). Weiter ist bei Bedarf auch möglich, die Brühkammerteile gegeneinander abzudichten, so dass die Brühkammer gegen aussen dicht ist, was nachstehend noch eingehender erläutert wird.

Das Bewegen des Auflageelements durch das Verschliessen der Brühkammer erfolgt bevorzugt rein mechanisch, ohne elektrischen Antrieb. Insbesondere wird die Bewegung durch die Relativbewegung des zweiten Brühkammerteils zum ersten Brühkammerteil selbst bewirkt. Die verschiedene Bewegungsrichtung der Auflageelement-Bewegung kann dann bspw. durch Umlenk- und/oder Führungsmittel bewirkt sein, die eine Bewegung des zweiten Brühkammerteils in einer ersten Richtung in eine Bewegung des Auflageelements in eine zweite Richtung umsetzen.

Diese Umlenk- und/oder Führungsmittel können bspw. durch eine um eine feste Drehachse schwenkbaren Lagerung des Auflageelements oder alternativ durch die Translationsrichtung vorgebende Führungsmittel bewirkt werden.

Das Auflageelement kann insbesondere an einem stationären, nicht bewegten Brühmodulteil (z.B. dem ersten Brühmodulteil, insbesondere der Ausleitvorrichtung) oder einem anderen relativ zum ersten Brühmodulteil stationären Objekt, bspw. einem Modulgehäuse, schwenkbar oder anderswie bewegbar befestigt sein. Dabei besteht eine Wirkverbindung mit dem zweiten Brühmodulteil, indem durch dessen Bewegung das Auflageelement bewegt wird.

Auch das Umgekehrte - d.h. Befestigen des Auflageelements am bewegten Brühmodulteil - ist ohne weiteres denkbar.

Beim Öffnen der Brühkammer wird das Auflageelement erst zurück in die Auflagestellung bewegt, wenn die Brühkammer bis zu einem gewissen, vorbestimmten Mass geöffnet ist - bspw. vollständig geöffnet ist. Insbesondere ist das vorbestimmte Mass so gewählt, dass die Brühkammer beim Bewegen des Auflageelements in die Auflagestellung während des Öffnungsvorgangs weiter geöffnet ist als beim Bewegen des Auflageelements von der Auflagestellung weg beim Schliessvorgang (Hystereseverhalten).

In einer Ausführungsform wird beim Verschliessen der Brühkammer das Auflageelement entgegen einer Federkraft bewegt und verrastet so, dass beim erneuten Öffnen des Brühmoduls das Auflageelement zunächst in der Ruhestellung bleibt und die Kapsel in den Kapselbehälter fallen kann. Das Auslösen des Auflageelements erfolgt durch das Öffnen der Brühkammer, bspw. erst durch das vollständige Öffnen.

Es kann bspw. ein Rückhaltelement vorhanden sein, welches nach dem Verschliessen der Brühkammer das Auflageelement in der Ruhestellung hält, beispielsweise entgegen einer Federkraft. Erst durch ein vollständiges Öffnen der Brühkammer wird das Auflageelement in die Auflagestellung zurück bewegt. Dies kann bspw. dadurch geschehen, dass ggf. das Rückhalteelement durch eine Auslösepartie des bewegten Brühmodulteils so verschoben wird, dass sich eine Rastverbindung oder andere Verbindung mit dem Auflageelement löst und dieses in die Auflagestellung zurück gelangen kann. Die Wirkverbindung zwischen Rückhalteelement und bewegtem Brühmodulteil kann eine direkte sein (bspw. indem die Auslösepartie am Rückhalteelement anstösst) oder eine indirekte über ein separates Auslöseelement.

Eine weitere Möglichkeit besteht darin, das Auflageelement so zu lagern, dass es aufgrund der Wirkung mindestens einer Feder bistabil ist. Beispielsweise kann das Auflageelement beim Schliessen der Brühkammer entgegen einer Federkraft bewegt werden, bis es über eine Totpunktstellung hinaus bewegt wird, woraufhin es aufgrund der Federkraft weiterbewegt wird, bis es an einem Anschlag ansteht. Beim Wiederöffnen des Brühmoduls wird das Auflageelement wieder über den Totpunkt hinaus zurückbewegt. Dabei kann ein entsprechender Rückstellmechanismus so ausgebildet sein, dass er erst wirksam wird, wenn das Brühmodul so weit geöffnet ist, dass die Kapsel ausgestossen worden ist oder wird und nach unten fallen kann.

Beispielsweise kann ein als Auslöseelement dienender, vom zweiten Brühmodulteil beim Öffnen betätigter Bügel so dimensioniert sein, dass er erst auf dem letzten Teil der Wegstrecke (bspw. maximal auf dem letzten Drittel) beim Öffnen mitbewegt wird. Weiter kann eine geeignete Dämpfung vorhanden sein, welche das Auflageelement am raschen Zurückschnappen in die Auflagestellung hindert.

Als Alternative können die Umlenk- und/oder Führungsmittel in der Art einer Kulissenführung ausgebildet sein. Eine solche kann bspw. im bewegten (zweiten) Brühmodulteil ausgebildet sein, während das Auflagelement am anderen Brühmodulteil schwenkbar oder sonstwie bewegbar befestigt ist und ein geführtes, in die Kulissenführung eingreifendes Element aufweist - oder umgekehrt.

Das erwünschte Hystereseverhalten kann bspw. bewirkt werden, indem die Kulissenführung eine erste Führungsnut und eine zweite Führungsnut aufweist. Während des Schliessvorgangs wird ein geführtes Element (bspw. ein Führungsstift) in der ersten Führungsnut geführte, die so verläuft, dass das Auflageelement in der Auflagestellung bleibt, bis die Brühkammer fast verschlossen ist und das Auflageelement erst dann, d.h. erst beim oder kurz vor dem vollständigen Schliessen der Brühkammer in die Ruhestellung verschoben wird. Während die Brühkammer geöffnet wird, wird dann das geführte Element in einer zweiten Führungsnut geführt, die so liegt, dass das Auflageelement in der Ruhestellung bleibt, bis die Brühkammer fast ganz geöffnet und die Kapsel ausgeworfen ist. Durch das vollständige Öffnen wird dann das Auflageelement wieder zurück in die Auflagestellung verschoben.

Das Auflageelement kann seitliche Führungen aufweisen, die so auf die Kapselgeometrie abgestimmt sind, dass durch sie die Kapsel in Bezug auf seitliche Richtungen (horizontale Richtungen quer zur Achse) in gewünschter Präzision positioniert wird. Solche seitliche Führungen können als von der Auflagefläche beidseits nach oben ragende Vorsprünge/Stege ausgebildet sein; eine leicht konische Ausgestaltung mit einer sich gegen oben öffnenden Aufnahme für die Kapsel kann sinnvoll sein.

Das Greifelement, welches die Kapsel beim Wegbewegen des Auflageelements stützt, kann bspw. als umgreifende Dichtung des ersten und/oder des zweiten Brühmodulteils ausgebildet sein. Diese umgreifende Dichtung kann insbesondere einen die Kapsel positionierend und haltend umgreifenden Dichtungskragen aufweisen. Im Bereich des Dichtungskragens kann die Dichtung die Kapsel entlang einer umlaufenden Fläche umgreifen und aufgrund ihrer Elastizität gegen die Kapselwand gedrückt werden, derart, dass die Kapsel durch die Dichtung gehalten wird.

Durch das Zusammenspiel der Auflage und der umgreifenden, insbesondere flexiblen, elastisch verformbaren, bspw. gummielastischen und/oder elastomeren Dichtung kann die Kapsel für den Brühvorgang optimal zentriert werden. Dies ist insbesondere dann wertvoll, wenn die Kapsel nicht durch eine seitliche, an einem Kragen angreifende Führung während des ganzen Einwurfvorgangs und danach gehalten und positioniert wird, sodass eine gewisse Rest-Ungenauigkeit der Kapselposition erwartet werden muss.

Am Dichtungskragen kann/können für die Dichtfunktion ein oder mehrere umlaufende Dichtungslippen oder Dichtungswülste vorhanden sein. Diese mindestens eine Dichtungslippe und/oder Dichtungswulst kann so ausgebildet sein, dass sie/er linien-, oder streifenartig an einer Fläche der Kapsel anliegt und die Kapselwand gegen ein Kapselinneres drückt. Insbesondere kann bei der Dichtung optional eine Mehrzahl von umlaufenden Dichtungslippen und/oder Dichtungswülsten vorhanden sein, die aufgrund ihrer Elastizität die Kapselwand gegen ein Kapselinneres drücken, wobei zwischen aufeinander folgenden Dichtungslippen bzw. Dichtungswülsten jeweils eine Vertiefung angeordnet ist, derart, dass im Betriebszustand zwischen den aufeinander folgenden Dichtungslippen bzw. Dichtungswülsten und der Kapsel ein umlaufender Hohlraum gebildet wird. Es kann ergänzend oder alternativ auch vorgesehen sein, dass die Dichtung sowohl gegen eine Stirnfläche als auch gegen eine umlaufende Fläche abdichtet. Zu diesem Zweck kann mindestens eine der umlaufenden Dichtungslippen bzw. Dichtungswülste gegen eine Stirnfläche der Kapsel und mindestens eine der umlaufenden Dichtungslippen bzw. Dichtungswülste gegen eine umlaufende Fläche gedrückt werden.

Kapseldichtungen können beidseitig vorhanden sein, d.h. auf Seiten des Injektors und auf der Seite der Ausleitvorrichtung. In verschiedenen Ausführungsformen ist der injektorseitige Dichtungskragen ausgedehnter und/oder weist die injektorseitige Dichtung mehr Dichtungslippen auf als die extraktionsseitige Dichtung oder ist extraktionsseitig gar keine elastomere Dichtung vorhanden. Daher wird im Allgemeinen bei diesen Ausführungsformen auch die Kapsel auf der Injektorseite mit grösserer Reibungskraft gehalten als auf der Extraktionsseite. In Kombination mit Anordnungen, in denen der Injektor das bewegliche Brühmodulteil bildet, hat das den Vorteil, dass beim Öffnen der Brühkammer die Kapsel zunächst mit dem Injektor mitbewegt wird. Ein Herauslösen aus der umgreifenden Wirkung der injektorseitigen Dichtung kann bspw. durch Abstreifmittel geschehen, wie sie nachstehend noch eingehender diskutiert werden.

Die Kapseldichtung(en) und/oder ggf. die nachfolgend beschriebene Brühkammerdichtung wird/werden im Allgemeinen aus einem flexiblen, elastisch verformbaren, insbesondere gummielastischen und/oder elastomeren Material sein.

Beim Brühmodul kann - wie in den nachfolgend beschriebenen Ausführungsformen - das erste Brühmodulteil die Ausleitvorrichtung und das zweite Brühmodulteil den Injektor bilden. Alternativ dazu kann auch das Umgekehrte der Fall sein, also das erste Brühmodulteil bildet den Injektor und das zweite die Ausleitvorrichtung. Es sind sogar Konfigurationen denkbar, bei denen die Ausleitvorrichtung und der Injektor beide vom selben Brühmodulteil gebildet werden, wobei dann das andere Brühmodulteil insbesondere die Funktion des Ausübens einer Druckkraft gegen die Kapsel und/oder des Abdichtens aufweisen kann.

Die Ausleitvorrichtung und der Injektor sind vorzugsweise einander gegenüberliegend angeordnet und weisen beispielsweise eine Ausleitplatte mit mindestens einer von der Platte in die Brühkammer hinein abstehende Anstechspitze bzw. eine Injektorplatte, ebenfalls mit mindestens einer von der Platte in die Brühkammer hinein abstehende Injektorspitze auf. Die Anstechspitzen sind bspw. zum Anstechen von tiefgezogenen Kunststoff-Kapselwandungen, bspw. aus Polypropylen mit bspw. einer Dicke von zwischen 0.2 mm und 0.4 mm, bspw. zwischen 0.25 mm und 0.35 mm ausgebildet; als solche unterscheiden sie sich markant von Anstechspitzen für Aluminiumkapseln. Auch Anstechvorrichtungen für andere Kapselwandungsmaterialien als tiefgezogene Kunststoffe können jedoch vorhanden sein.

Weiter ist ein umlaufender Kragen der Kapsel zwar nach wie vor möglich aber nicht mehr notwendig. Vielmehr kann die Kapselaufnahme eine Auflage bildend beliebig entsprechend der Kapselform ausgestaltet sein.

Kapselformen ohne umlaufenden Kragen sind sogar besonders bevorzugt. Als Folge davon kommen auch Kapselformen in Betracht, die nicht mehr durch einen umlaufenden Kragen anisotrop versteift werden, was mehr Freiheitsgrade ermöglicht.

Gemäss einer speziellen Ausführungsform ist bspw. die Brühkammer für die Aufnahme einer im sich Gegensatz zum Stand der Technik nicht zur Ausleit- oder Injektorseite konisch verbreiternden Kapsel sondern einer bspw. würfelförmigen oder quaderförmigen Kapsel ausgebildet. Unter quader- bzw. würfelförmig versteht man hier eine Form, die von der geometrisch exakten Quader- bzw. Würfelform nicht so weit abweichen, dass sie funktionell sehr verschieden wären; bspw. ist die Form eines Pyramidenstumpfs mit rechteckiger bzw. quadratischer Grundfläche, wobei die an die Grundfläche angrenzenden Seitenflächen gegenüber der Senkrechten zur Grundfläche um nur einen kleinen Neigungswinkel α von bspw. höchstens 2°, vorzugsweise höchstens ca. 1° geneigt sind, mit eingeschlossen. Die Quader- bzw. Würfelform schliesst einen umlaufenden, vom Kapselkörper auf der Ebene einer Endfläche abstehenden Kragen aus, der zum Halten der Kapsel in Führungsschlitzen vorgesehen ist. Die Quader- bzw. würfelförmige Kapsel kann trotzdem herstellungstechnisch bedingte umlaufende Ränder (bspw. eine Schweissbraue) aufweisen, die bspw. maximal 1.5 mm oder 1 mm oder weniger seitlich hervorstehen und die bspw. von einer Endflächen-Ebene abgesetzt sind.

Zum Verschliessen der Brühkammer kann das zweite Brühmodulteil relativ zum ersten Brühmodulteil linear entlang einer axialen Richtung - d.h. translatorisch bzw. im Wesentlichen translatorisch - bewegbar sein. Eine Schwenkbewegung der Brühmodulteile relativ zueinander ist nicht ausgeschlossen, aber im Allgemeinen unnötig. Insbesondere wird vorzugsweise die Kapsel beim Verschliessen der Brühkammer nicht verschwenkt, d.h. die Orientierung der Kapsel bleibt beim Verschliessen der Brühkammer im Wesentlichen erhalten.

In Ausführungsformen kann das Brühmodul so ausgebildet sein, dass sich die Kapsel beim Verschliessen der Brühkammer im Wesentlichen nicht bewegt - bis auf eine axiale Verschiebung um etwa die Länge einer Anstechspitze zum Anstechen der Kapsel. Insbesondere ist das Brühmodul so ausgebildet, dass die Kapsel beim Verschliessen der Brühkammer nicht verkippt, wird, sondern dass seine Orientierung beibehalten bleibt.

Gemäss einer Ausführungsform ist die Auflage und bspw. die ganze Kapselaufnahme oder das ganze Brühmodul gegenüber der Horizontalen verkippt; sie ist zum ersten Brühmodulteil hin nach unten abschüssig. Das bedeutet, dass eine Befestigung des Brühmodulteils in der Kaffeemaschine so ausgebildet ist, dass diese Verkippung bzw. Abschüssigkeit vorhanden ist, wenn die Kaffeemaschine auf einer horizontalen Unterlage bestimmungsgemäss abgestellt ist. Zu diesem Zweck kann das Brühmodul bspw. ein Befestigungselement aufweisen, das so mit einem Brühmodul-Gerüst verbunden ist, dass diese genannte Neigung des Brühmoduls vorhanden ist. Alternativ kann auch ein Brühmodulgehäuse so geformt sein, dass diese Neigung erreicht wird. Die Neigung der Achse Injektor-Ausleitvorrichtung zur Horizontalen hin beträgt vorzugsweise zwischen 2° und 15° oder 10°, vorzugsweise zwischen 3° und 7°. Bei einer im Wesentlichen würfelförmigen Kapsel bedeutet das gleichzeitig eine Neigung der horizontalen Kapsel-Symmetrieachse zur Horizontalen um zwischen 2° und 15° bzw. zw. 2° und 10°, vorzugsweise zwischen 3° und 7°.

Bevorzugt umschliesst die Brühkammer die Kapsel vollständig, d.h. die Kapselaufnahme und das zweite Brühmodulteil weisen Elemente auf, die passgenau einander entsprechen und in der geschlossenen Stellung zusammen die Brühkammer bilden. Die Wandungen in axialer Richtung (bezogen auf die Führung der Brühflüssigkeit und/oder auf die Bewegungsrichtung der relativen Bewegung der Brühmodulteile) bilden beispielsweise eine Injektorplatte mit mindestens einer von der Platte in die Brühkammer hinein abstehende Injektorspitze und eine Ausleitplatte, ebenfalls mit mindestens einer von der Platte in die Brühkammer hinein abstehende Anstechspitze. Die oberen, unteren und seitlichen Wandungen werden durch entsprechende aneinander stossende Wandungsteile des ersten und des zweiten Brühmodulteils gebildet. Die vom ersten Brühmodulteil gebildeten Wandungsteile und die vom zweiten Brühmodulteil gebildeten Wandungsteile können in der geschlossenen Position gegeneinander abgedichtet sein, bspw. durch eine umlaufende Formdichtung. Diese Dichtung kann bspw. eine Lippendichtung aufweisen, welche an einem der Brühmodulteile befestigt ist und beim Verschliessen der Brühkammer gegen eine Fläche des anderen Brühmodulteils anstösst. Eine dergestalt abgeschlossene Brühkammer ermöglicht ein Spülen des Extraktionsgeräts bzw. des Brühmoduls, ohne dass eine Kapsel eingelegt werden müsste - was für den Benutzer ein markanter Vorteil ist. Dies schliesst jedoch die Verwendung einer Spül- oder Platzhalterkapsel während des Spül- oder Reinigungsvorgangs - mit abgeschlossener oder nicht vollständig abgeschlossener Brühkammer - nicht aus.

Im Unterschied zum Stand der Technik weisen Ausführungsformen mit die Kapsel ganz umschliessender Brühkammer und mit gegeneinander abgedichteten Brühkammerteilen eine zweistufige Dichtung auf. Eine erste Dichtungsstufe wird durch die Kapseldichtung(en) gebildet, welche die Kapsel umgreift/umgreifen und verhindern, dass die eingeleitete Extraktionsflüssigkeit bzw. das ausgeleitete Extraktionsprodukt an der Kapsel vorbei fliessen. Diese erste Dichtungsstufe dichtet die Kapsel gegen den Injektor bzw. gegen die Ausleitvorrichtung ab. Die zweite Dichtungsstufe dichtet die Brühmodulteile gegeneinander ab. Sie kann einerseits der ergänzenden Abdichtung während des Brühvorgangs dienen. Andererseits kann sie wie erwähnt dem Abdichten während eines Spülvorgangs dienen.

Das Halten der Kapsel in der Brühkammer durch eine umlaufende Dichtung, ggf. in Kombination mit einem Abdichten der Brühkammer, hat gegenüber Ausführungsformen, bei denen ein umlaufender Kragen der Kapsel gehalten wird, auch einen weiteren markanten Vorteil. Es sind nämlich substantielle Fertigungstoleranzen möglich, d.h. die Genauigkeit der Positionierung der Brühmodulteile relativ zueinander muss nicht genauer als Zehntelmillimeter sein, sondern die Toleranz kann unter Umständen mehrere Zehntelmillimeter betragen. Das Halten der Kapsel durch eine umlaufende Dichtung bzw. umlaufende Dichtungen kann dabei die Toleranzen aufnehmen.

Das Vorgehen gemäss der beanspruchten Erfindung ermöglicht zunächst eine sehr kompakte Bauweise, da die Kapsel ohne Kragen ausgestaltet werden kann und dadurch die Brühkammer auch keine entsprechende Aufnahme und Halterung für einen Kragen aufweisen muss.

In Ausführungsformen, optional auch unabhängig von der beanspruchten Erfindung, kann das Brühmodul bewegbare Kapselabstreifmittel aufweisen.

Insbesondere können Haltemittel des zweiten Brühmodulteils - bspw. das Greifelement, insbesondere die Kapseldichtung mit dem umlaufenden Dichtungskragen - beim Öffnen der Brühkammer die Kapsel zunächst mit dem zweiten Brühmodulteil mit bewegen und die Abstreifmittel dann beim weiteren Öffnen der Brühkammer selbsttätig mit der Kapsel in Eingriff kommen und ein weiteres Mitbewegen der Kapsel mit dem zweiten Brühmodulteil verhindern.

Die Kapselabstreifmittel sind bspw. als von den Seiten horizontal radial nach innen, zur Kapsel hin, ragende vom bewegbaren Brühmodulteil weg und nach aussen umklappbare Teile (Flügel) ausgebildet. Das Wegklappen vom bewegbaren Brühmodulteil weg kann bspw. beim Verschliessen der Brühkammer durch das bewegbare Brühmodulteil und entgegen einer Federkraft geschehen.

Beim Öffnen der Brühkammer nach dem Brühprozess - in diesem Zustand weist oft die Kapsel in radialen Richtungen eine leicht grössere Ausdehnung aus als vor dem Brühprozess, wegen der während dem Brühprozess von innen auf die Kapsel einwirkenden hohen Drücke und Temperaturen - verkanten/verklemmen diese Abstreifelemente mit der Kapsel oder stossen an eine Verstärkung oder einen Kragen der Kapsel an und verhindern ein Mitbewegen der Kapsel mit dem bewegbaren Brühmodulteil.

Das Zurückhalten der Kapsel durch die Abstreifelemente kann bspw. auf folgende Arten bewirkt werden.
- Reibung: Die Kraft, mit der die Abstreifelemente an der Kapsel anliegen bewirkt einen Reibungswiderstand gegen ein Verschieben der Kapsel relativ zu den innenseitigen Kanten der Abstreifelemente.
- Verklemmen: Die Abstreifelemente und die Kapsel sind so dimensioniert, dass die Kapsel ein vollständiges zurückklappen der Abstreifelemente verhindert. Auch aufgrund von Reibung werden die innenseitigen Kanten der Abstreifelemente beim weiteren Zurückziehen der Kapsel ins Kapselinnere gedrückt und bewirken so ein Verklemmen, das einem weiteren Zurückziehen der Kapsel entgegenwirkt.
- Anstehen an einer Verstärkung oder dergleichen der Kapsel. Die Kapsel kann bspw. eine umlaufende Schweissnaht oder dergleichen aufweisen, die eine lokale Verstärkung oder ein leicht vorstehendes Merkmal bildet. Auch ein umlaufender Kragen der an sich bekannten Art kann eine solche Verstärkung bilden. Die Positionierung der Abstreifelemente ist so, dass sie beim Öffnen der Brühkammer injektionsseitig dieser Verstärkung an der Kapsel anliegen und dass die Verstärkung nicht an den Abstreifelementen vorbei gezogen werden kann.

Auch Kombinationen von jeweils zwei oder allen dreien dieser Möglichkeiten sowie andere Varianten und Kombination damit sind denkbar (wobei beim Verklemm-Ansatz ohnehin Reibung dazu gehört).

Vorteilhafte Merkmale des Brühmoduls- bspw. im Zusammenhang mit der die Kapsel umgreifenden Dichtung und/oder der Brühkammerdichtung - können generell auch in Ausführungsformen des Brühmoduls mit bewegbaren Kapselabstreifmitteln realisiert sein.

Als Alternative zu Abstreifmitteln gemäss kann das Brühmodul auch mindestens einen Ausstosser aufweisen. Ein solcher wird beim Öffnen bzw. Schliessen der Brühkammer in ungefähr axialer Richtung relativ zu dem Brühmodulteil bewegt, in welchem die Kapsel beim Öffnen des Brühmoduls hängen bleibt. In Ausführungsformen mit einer die Kapsel umgreifenden injektionsseitigen Kapseldichtung wird der mindestens eine Ausstosser also beim Öffnen/Schliessen der Brühkammer relativ zum Injektor bewegt, und zwar so, dass er beim Öffnens der Brühkammer die Kapsel aus dem Injektor, d.h. auch ggf. aus der die Kapsel umgreifenden Dichtung ausstösst.

Der Ausstosser kann bspw. im entsprechenden Brühmodulteil (bspw. Injektor) axial verschiebbar gelagert sein und in der Art eines Kolbens die Kapsel nach dem Brühprozess ausstossen.

Wenn das entsprechende Brühmodulteil das beim Öffnen/Verschliessen relativ zum Gehäuse bewegte Brühmodulteil ist, kann der Ausstosser bspw. gehäusefest gelagert sein, so dass er die Öffnungs- bzw. Schliessbewegung nicht mitmacht.

Oft ist jedoch besonders vorteilhaft, wenn der Ausstosser die relative Bewegung des entsprechenden Brühmodulteils relativ zum anderen Brühmodulteil mitmacht, jedoch um eine reduzierte Wegstrecke. So kann bspw. vorgesehen sein, dass der Ausstosser durch die Betätigung des Bedienhebels mitbewegt wird, aber bspw. um eine kürzere Wegstrecke. Dies kann bei durch einen Bedienhebel betätigten bspw. bewirkt werden, indem ein den Ausstosser bewegender Pleuel näher bei der Schwenkachse des Bedienhebels befestigt ist als der entsprechende Pleuel für das bewegte Brühmodul.

Ebenfalls Gegenstand der Erfindung ist ein Extraktionsgerät, insbesondere eine Kaffeemaschine, mit einem der genannten Brühmodule.

Zusätzlich Gegenstand der Erfindung ist ein Verfahren zum Brühen eines Brühgetränks unter Verwendung einer Kapsel. Dieses wird bspw. mit einem Brühmodul bzw. einem Extraktionsgerät der vorstehend beschriebenen Art durchgeführt und kann die die Schritte umfassen:
- Einwerfen einer Portionenkapsel mit einem Extraktionsgut in eine geöffnete Kammer eines Brühmoduls - bspw. durch eine positionierende Einwurföffnung, so, dass sie mindestens teilweise auf einem sich in einer Auflagestellung befindlichen Auflageelement aufliegt;
- Verschliessen der Brühkammer durch Bewegen eines zweiten Brühmodulteils relativ zu einem ersten Brühmodulteil, derart, dass das Auflageelement durch eine Bewegung in einer von der Bewegungsrichtung des zweiten Brühmodulteils relativ zum ersten Brühmodulteil verschiedenen Richtung von der Auflagestellung weg in eine Ruhestellung bewegt wird und die Kapsel mindestens durch Anstechspitzen eines durch das erste und/oder das zweite Brühmodulteil gebildeten Injektors angestochen wird, wodurch Einleitöffnungen in der Kapsel entstehen;

- Einleiten einer Extraktionsflüssigkeit in die Kapsel durch die Einleitöffnungen (bspw. von heissem Wasser unter Gebrauch einer Pumpe und eines Rückschlagventils);
- Ausleiten der Extraktionsflüssigkeit aus der Kapsel durch Ausleitöffnungen, die von Anstechspitzen einer durch das erste und/oder das zweite Brühmodulteil gebildeten Ausleitvorrichtung erzeugt wurden;
- Anschliessend an das Ausleiten, öffnen der Brühkammer durch Bewegen des zweiten Brühmodulteils relativ zum ersten Brühmodulteil bis die Kapsel aus der geöffneten Brühkammer nach unten fällt; und
- Fortsetzen des Öffnens der Brühkammer bis das Zurückbewegen des Auflageelements in die Auflagestellung bewirkt wird, indem das Auflageelement so mit den anderen Brühmodulteilen zusammenwirkt, dass es beim Öffnen der Brühkammer erst in die Auflagestellung zurückbewegt wird, wenn die Brühkammer bis zu einem vorbestimmten Mass geöffnet ist, wobei dieses Mass so gewählt ist, dass die Brühkammer beim Bewegen des Auflageelements in die Auflagestellung während des Öffnungsvorgangs weiter geöffnet ist als beim Bewegen des Auflageelements von der Auflagestellung weg beim Schliessvorgang.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur unterschiedlichen Grössen. Es zeigen:
- Figur 1 eine Ansicht eines erfindungsgemässen Brühmoduls in der Kapseleinwurfstellung;
- Figur 2 eine Ansicht des Brühmoduls gemäss Figur 1 in der geschlossenen Stellung;
- Figur 3 eine Schnittansicht (d.h. Ansicht des geschnittenen Objekts) einer Partie des geschnitten gezeigten Brühmodul in der offenen Stellung;
- Figuren 4 eine Schnittansicht eines Details des offenen Brühmoduls mit eingeworfener Kapsel;
- Figuren 5 und 6 je Schnittansichten des Brühmoduls mit Kapsel gemäss Figur 4 im offenen und im geschlossenen Zustand;
- Figur 7 Schnittdarstellung einer ersten Dichtung;
- Figur 8 eine Schnittdarstellung einer zweiten, alternativen Ausführungsform einer Dichtung, wobei sich das Brühmodul im geschlossenen Zustand befindet;
- Figur 9 eine Ansicht von Teilen des Brühmoduls im geschlossenen Zustand;
- Figur 10 eine Schnittansicht einer alternative Ausführungsform in offenen Zustand;
- Figuren 11 und 12 Schnittansichten der Ausführungsform gemäss Fig. 10 mit eingeworfener Kapsel im offenen Zustand und während des Schliessens;
- Figuren 13-18 Ansichten, von einer anderen Seite her, der Ausführungsform gemäss Figur 10 in verschiedenen Zuständen während des Schliessens und anschliessenden Öffnens der Brühkammer;
- Figur 19 eine Ansicht von Elementen der Ausführungsform von Fig. 10,
- Figur 20 schematisch eine Kaffeemaschine mit einem horizontalen Brühmodul der im vorliegenden Dokument beschriebenen und definierten Art;
- Figuren 21 und 22 eine Ansicht (mit entfernten Gehäuseteilen) und eine Schnittansicht einer dritten Ausführungsform eines Brühmoduls, mit einzuwerfender Kapsel,
- Figur 23 eine weitere Ansicht der dritten Ausführungsform ohne Teile des Gehäuses,
- Figur 24 die Ansicht der entlang der Ebene A-A in Figur 23 geschnittenen Teile des Brühmoduls,
- Figuren 25-27 Ansichten entsprechend der Darstellung von Fig. 21 in unterschiedlichen Positionen während des Schliessvorgangs,
- Figur 28 eine Schnittansicht in der Stellung gemäss Fig. 27,
- Fig. 29 ein Detail zu Fig. 27,
- Fig. 30 das Brühmodul in seiner dritten Ausführungsform im geschlossenen Zustand,
- Fig. 31 eine weitere Ansicht von Elementen dieses Brühmoduls im geschlossenen Zustand,
- Fig. 32 das Brühmodul in seiner dritten Ausführungsform beim Öffnen,
- Fig. 33 ein Detail zu Fig. 32,
- Figuren 34-36 Ansichten einer vierten Ausführungsform des Brühmoduls im offenen Zustand;
- Figur 37 eine Ansicht dieser Ausführungsform im geschlossenen Zustand, und
- Figuren 38 und 39 je eine Schnittdarstellung des entlang einer horizontalen Ebene oberhalb der Brühkammer geschnittenen Brühmoduls in der vierten Ausführungsform, während des Schliessens bzw. während des Öffnens der Brühkammer.

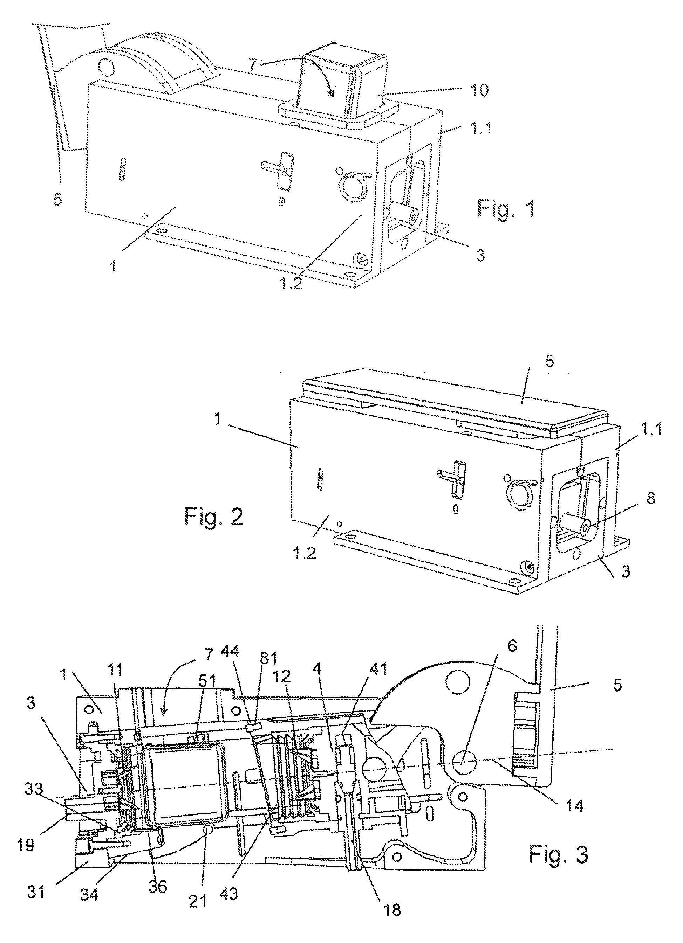

Das Brühmodul gemäss **Figuren 1-6** weist in einem äusseren Gehäuse 1 geführt eine Ausleitvorrichtung 3 und einen Injektor 4 auf. Ausleitvorrichtung 3 und Injektor 4 sind durch Verschwenken des Bedienhebels 5 relativ zueinander verschiebbar. Der Bedienhebel ist zu diesem Zweck um einen Drehzapfen 6 schwenkbar, welcher am äusseren Gehäuse 1 vorhanden ist oder durch dieses gehalten wird. In der gezeichneten Ausführungsform ist der Injektor 4 durch eine Schwenkbewegung des Bedienhebels 5 nach unten in Richtung der Ausleitvorrichtung 3 verschiebbar, während letztere relativ zum äusseren Gehäuse 1 unbeweglich ist.

Das äussere Gehäuse 1 kann wie im dargestellten Ausführungsbeispiel aus zwei Halbschalen 1.1, 1.2 zusammengesetzt sein, was man in Figuren 1 und 2 sieht. Die Halbschalen 1.1, 1.2 können innenseitig so geformt sein, dass sie die im Gehäuse gelagerten Teile - bspw. die Ausleitvorrichtung oder den gleitend gelagerten Injektor positionierend aufnehmen. So können diese Teile unter Umständen gar ohne separate Befestigungsmittel (Schrauben oder dergleichen) gelagert sein, abgesehen natürlich von Schrauben (o.ä.), welche die beiden Halbschalen aneinander befestigen.

Im Betriebszustand dient das Brühmodul als horizontales Brühmodul einer Kaffeemaschine, welche nebst dem Brühmodul einen Wassertank, eine

Wasserheizungsvorrichtung (bspw. Durchlauferhitzer) und eine Pumpe zum Zuführen von Brühwasser zum Injektor 4 aufweist. Die entsprechenden Zuführkanäle 18 sowie eventuell ein Rückschlagventil etc. des Injektors können wie an sich bekannt ausgebildet sein; sie sind nicht Gegenstand der Erfindung und werden hier nicht eingehender beschrieben. Der Injektor weist ausserdem mindestens eine Anstechspitze 12 mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 3 ist mit mindestens einer Anstechspitze 11 und einer zugeordneten Ausleitöffnung 19 versehen. Weiter ist je nach Konfiguration auch eine Auslaufleitung vorhanden, mit welcher aus dem Austritt 8 der Ausleitvorrichtung austretender Kaffee (oder dgl.) so geführt wird, dass er in eine am vorgesehenen Ort abgestellte Tasse rinnt. Auch die zum Austritt 8 führenden Kanäle werden hier nicht eingehend beschrieben.

Der Injektor 4 ist im dargestellten Ausführungsbeispiel aus vier Teilen aufgebaut: einem Injektorsupport als erstem Injektorteil 41 mit Zuführkanal zum Heranführen von Heisswasser und einem am ersten Injektorteil gehaltenen Injektorplattenhalter mit injektorseitigen Anstechspitzen 12, einer Kapseldichtung 43 und einem die Kapseldichtung mindestens teilweise umgebenden injektionsseitigem Brühkammergehäuseteil 44. Auch die Ausleitvorrichtung ist hier mehrteilig aufgebaut mit einem Ausleitvorrichtungsgehäuse 31 mit Ausleitkanal 19 oder Ausleitkanälen 19 für das Brühgetränk und mit extraktionsseitigen Anstechspitzen 11, eine extraktionsseitige Kapseldichtung 33 und extraktionsseitigem Brühkammergehäuseteil 34. Das injektionsseitige 44 und/oder das extraktionsseitige Brühkammergehäuseteil 34 kann noch - beispielsweise in einer Nut 45 geführt - eine Brühkammerdichtung 81 aufweisen, welche im geschlossenen Zustand der Brühkammer am jeweils anderen Brühmodulteil anliegt und so die Brühkammer gegen aussen abdichtet. Die Mehrteiligkeit von Injektor und/oder Ausleitvorrichtung kann fertigungstechnisch vorteilhaft sein, ist aber keine Voraussetzung für das Funktionieren der Erfindung.

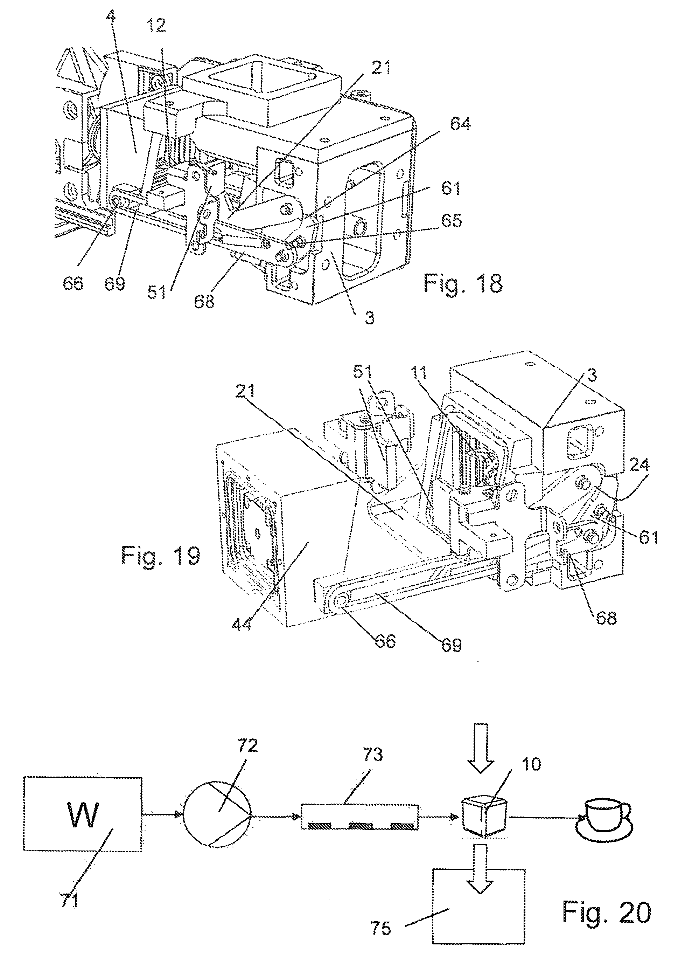

Die jeweiligen Anstechspitzen 11, 12 können am eigentlichen jeweiligen Brühmodulteil 31, 41 angeformt sein oder wie in WO 2010/118544 anhand Fig. 19-24 ausgeführt auf einem separaten Anstechteil (Platte) vorhanden oder sonst wie auf geeignete Art ausgeführt sein. Auch abgesehen von der Art der Befestigung können die Anstechspitzen und Elemente, an denen sie befestigt sind, gemäss der WO 2010/118544 ausgeführt sein.

In Figuren 1 und 3 gut sichtbar ist die Einwurföffnung 7 zum Einwerfen einer kubischen Portionenkapsel 10. Die Einwurföffnung ist im äusseren Gehäuse 1 ausgebildet, befindet sich im Bereich der Ausleitvorrichtung 3 und bleibt wie diese bei einer Bewegung des Bedienhebels stationär. Die Einwurföffnung kann sich gegen unten verengend leicht konisch sein, um so beim Einwerfen eine zentrierende Wirkung auf die Kapsel zu haben, ohne dass die Gefahr eines Verkantens der Kapsel zu gross wäre.

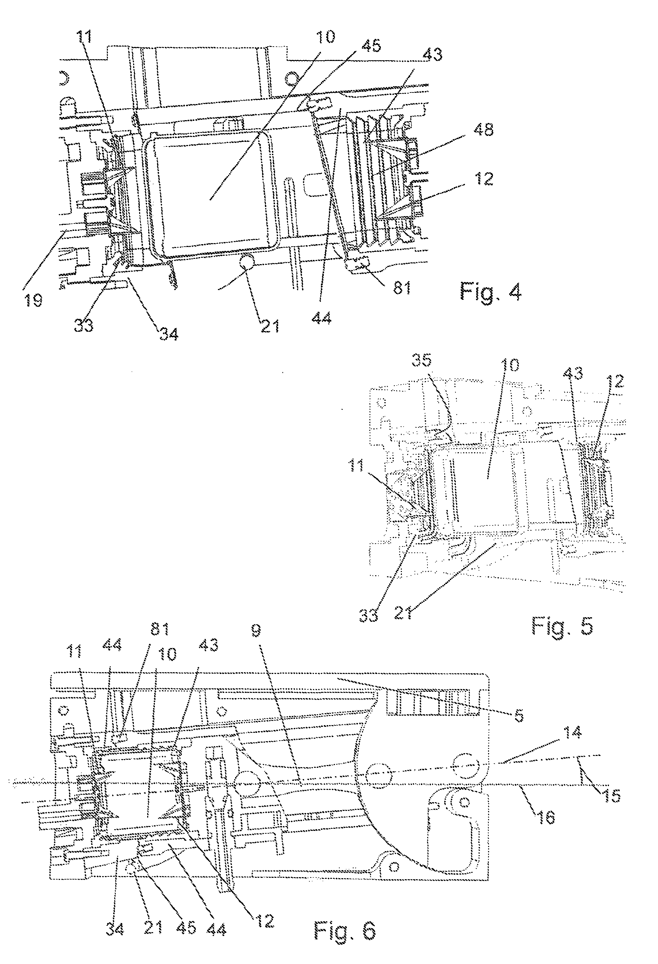

Wie in Figur 3 ersichtlich ist das Brühmodul so ausgebildet, dass die axiale Richtung - die Injektor und Ausleitvorrichtung verbindende Achse, entlang derer das bewegbare Brühmodulteil (d.h. hier der Injektor) beim Öffnen und Verschliessen der Brühkammer bewegt wird - leicht, bspw. um ca. 5°, gegenüber der Horizontalen geneigt ist, zwar so, dass das bewegbare Brühmodulteil (d.h. hier der Injektor) sich leicht nach unten bewegt, wenn es sich auf sich auf das ortsfeste Brühmodulteil (d.h. hier die Ausleitvorrichtung) zubewegt. In Figur 6 sind auch die Achse Injektor-Ausleitvorrichtung 14 sowie der Winkel 15 zur Horizontalen 16 hin eingezeichnet; die Achse Injektor-Ausleitvorrichtung entspricht im Wesentlichen auch der Kapsel-Symmetrieachse oder ist parallel zu dieser.

Wie ebenfalls bspw. in Figur 3 sichtbar ist, weist das Brühmodul weiter ein Auflageelement 21 auf. Zusammen mit einem Auflagevorsprung 36 der Ausleitvorrichtung 3 bildet diese für die durch die Einwurföffnung 7 eingeworfene Kapsel eine Auflage.

In Figur 3 sieht man auch Kapselabstreifelemente 51, deren Funktion und Wirkungsweise nachstehend noch eingehender erläutert wird.

Figur 4 zeigt ein Detail des Brühmoduls im offenen Zustand mit eingeworfener Kapsel 10. Man sieht auch, dass die Einwurföffnung 7 und die Ausleitvorrichtung 3 relativ zueinander so positioniert sind, dass die Kapsel unmittelbar vor den extraktionsseitigen Anstechspitzen 11 zu liegen kommt, d.h. entweder diese bereits berührt oder sich in einem Abstand von höchstens der Höhe einer Spitze von diesen befindet.

In Figuren 4 und 5 sieht man auch die extraktionsseitige Kapseldichtung 33 und die injektorseitige Kapseldichtung 43 besonders gut. Die injektorseitige Kapseldichtung 43 weist eine Mehrzahl von aufeinander folgenden Dichtungsrippen 48 auf, welche am Dichtungskragen ausgeformt sind und die Kapsel dichtend umgreifen. Insgesamt können die Kapseldichtungen 33, 43 gemäss der Lehre der PCT/CH2010/000249 ausgebildet sein, auf die hier ausdrücklich Bezug genommen wird.

Beim Verschliessen der Brühkammer wird durch das Heranfahren des Injektors 4 der umlaufende Kragen der Dichtung 43 der Kapsel 10 übergestreift und umgreift den injektorseitigen Teil der umlaufenden Kapselwandung. Dann beginnen die Spitzen der Perforationselemente (Anstechspitzen 11, 12) die injektionsseitige und/oder extraktionsseitige Kapselwandung zu durchstossen.

Figur 6 zeigt die Brühkammer im geschlossenen Zustand des Brühmoduls. Die Brühkammergehäuseteile 34, 44 der Ausleitvorrichtung und des Injektors passen passgenau zusammen. Im geschlossenen Zustand stossen die umlaufenden, die Kapsel umgebenden Brühkammergehäuseteile 34, 44 der Ausleitvorrichtung und des Injektors aneinander und verschliessen so die Brühkammer. Sie bilden (bei der hier dargestellten Kapselform) Seitenwände der verschlossenen Brühkammer. An der Berührungsfläche (stirnseitig) kann zu diesem Zweck noch eine Brühkammerdichtung vorhanden sein. Dadurch wird ein zweistufiges Abdichten erreicht. Die Brühkammerdichtung kann dabei am Injektor oder an der Ausleitvorrichtung befestigt sein und gegen eine entsprechende Dichtfläche des jeweils anderen Teils gedrückt werden. Oft ist bevorzugt, wenn die Dichtung am Injektor befestigt ist, da dieser sich im geöffneten Zustand an einer zurückgezogenen Position befindet und daher besser geschützt ist.

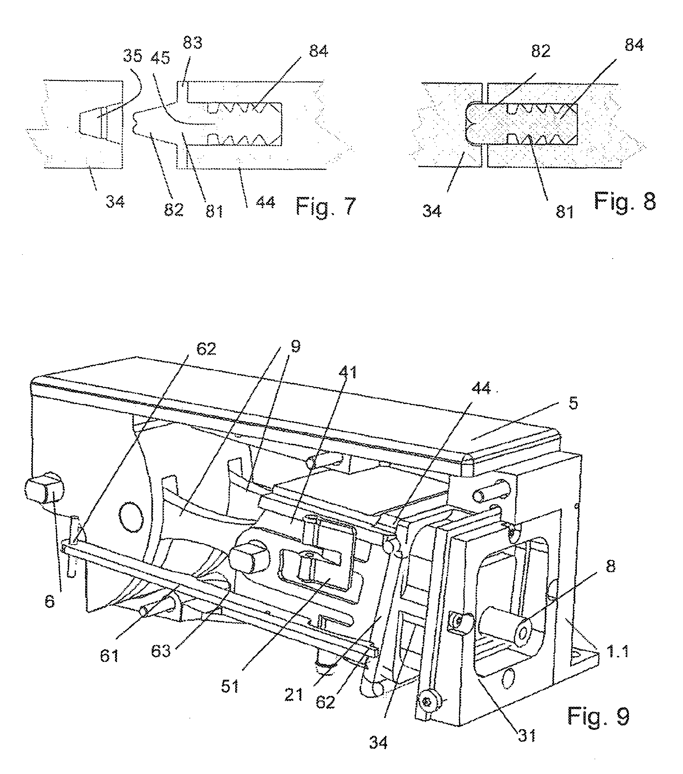

**Figuren 7 und 8** zeigen zwei Beispiele eines solchen Dichtungsprinzips. Die Brühkammerdichtung 81 gemäss Figur 7 weist eine axial vorstehende Lippe 82 auf, die in eine entsprechende Nut 35 des anderen Brühkammerteils eingreift. Zusätzlich bildet sie auch eine Schulter 83, die gegen die entsprechende Fläche des anderen Brühkammerteils gedrückt wird. Eine rückseitige Befestigungspartie 84 verankert die Dichtung im entsprechenden Brühkammerteil. Die Brühkammerdichtung gemäss Figur **8** entspricht vorderseitig dem 'Quadring'-Prinzip mit zwei Dichtungslippen 82, die in eine gemeinsame breite Nut des anderen Brühkammerteils eingreifen. Auch andere Dichtungsprinzipien wären denkbar, bspw. auch mit einer einzigen Dichtungslippe oder einem Dichtungswulst, die/der gegen eine Fläche gedrückt wird, bspw. in Form eines O-Rings - oder entsprechend mit mehreren Dichtungslippen/Dichtungswülsten.

**Figur 9** zeigt noch eine nicht geschnittene Ansicht, bei welcher eine der beiden Halbschalen des äusseren Gehäuses 1 jedoch nicht dargestellt ist. In Fig. 9 ist die Brühkammer geschlossen. Die Kapselabstreifelemente 51 sind beidseitig durch den heranfahrenden Injektor nach aussen geklappt worden, und das Auflageelement 21 ist nach unten in die Ruhestellung verschoben. Ein als um eine gehäusefeste Achse 62 schwenkbare Stange ausgebildetes Rückhalteelement 61 ist mit seinem extraktionsseitigen Ende im Eingriff mit dem Auflageelement 21. Das extraktionsseitige Ende des Rückhalteelements 61 wurde beim Verschliessen der Brühkammer durch eine Schwenkbewegung des Rückhalteelements auf die entsprechende Partie des Auflageelements aufgeclippt. Beim Öffnen der Brühkammer durch verschwenken des Bedienhebels 5 wird der Injektor von der Ableitvorrichtung weg translatorisch verschoben (in Fig. 9 nach hinten links). Sobald die vordere Kante des Injektors hinter die Kapselabstreifelemente 51 verschoben ist, klappen diese nach innen zur Kapsel hin und verklemmen diese gegen ein weiteres Zurückziehen. Das Rückhalteelement 61 verhindert gleichzeitig, dass das Auflageelement aufgrund der Wirkung der sie haltenden Feder(n) (nicht gezeichnet) zurück in die Auflagestellung verschwenkt wird. So kann die Kapsel nach unten in den Kapselbehälter fallen, sobald die Brühkammer genügend weit geöffnet ist. Erst beim vollständigen Öffnen der Brühkammer durch Bewegen des Bedienhebels bis fast an einen Anschlag gelangt das Auflageelement wieder zurück in die Auflagestellung. Dies geschieht in der dargestellten Ausführungsform, indem eine dafür vorgesehene (Auslöse-)Partie des Injektors gegen eine Rampe 63 des Rückhalteelements 61 gedrückt wird und das Rückhalteelement so nach aussen verschwenkt. Die Schnappverbindung mit dem Auflageelement löst sich, und dieses schwenkt aufgrund der Federkraft zurück nach oben in die Auflagestellung.

In Fig. 9 gut sichtbar sind die beiden Pleuel 9, welche die Schwenkbewegung des Bedienhebels 5 in die lineare Bewegung des Injektors 4 umsetzen.

Anhand der nachfolgenden Figuren wird anhand einer zweiten Ausführungsform des Brühmoduls die Funktionsweise einzelner Teile noch eingehender erläutert. Die zweite Ausführungsform unterscheidet sich von der ersten Ausführungsform erstens durch die hier nicht eingehender diskutierte abweichende Ausgestaltung des äusseren Gehäuses. Zweitens ist auch der Mechanismus der Wirkverbindung zwischen Injektor und Auflageelement anders gelöst. Drittens auch einzelne Elemente, insbesondere das Auflageelement in ihrer Form anders ausgestaltet als bei der vorstehend diskutierten Ausführungsform. Es versteht sich, dass diese Unterschiede unabhängig voneinander implementierbar sind. So hängt bspw. die Ausgestaltung des das Auflageelement auslösenden Mechanismus nicht von der Form und Ausgestaltung der einzelnen Teile ab, abgesehen natürlich von den hier explizit diskutierten funktionsbedingten Merkmalen.

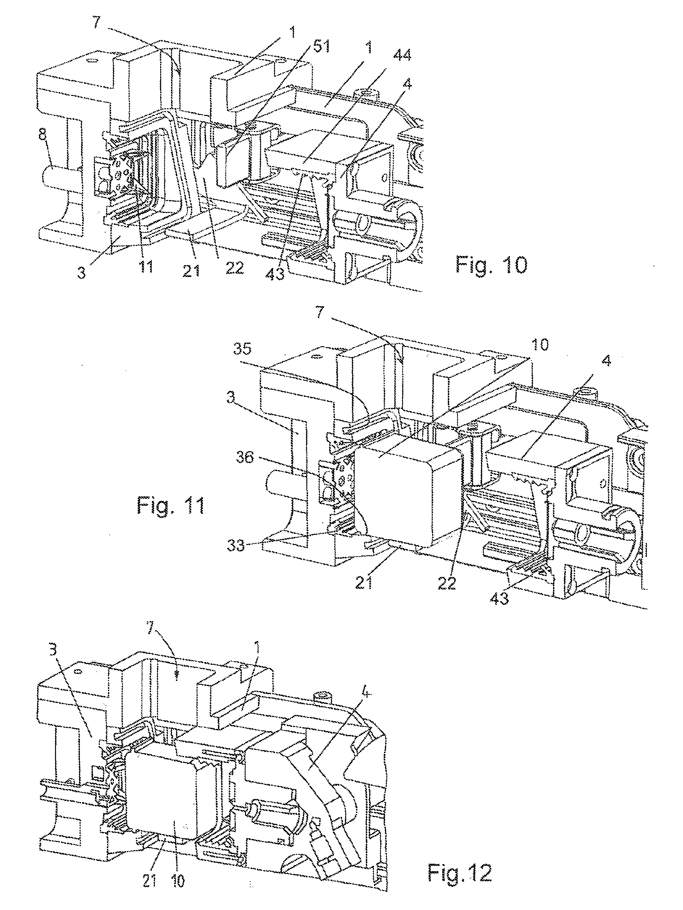

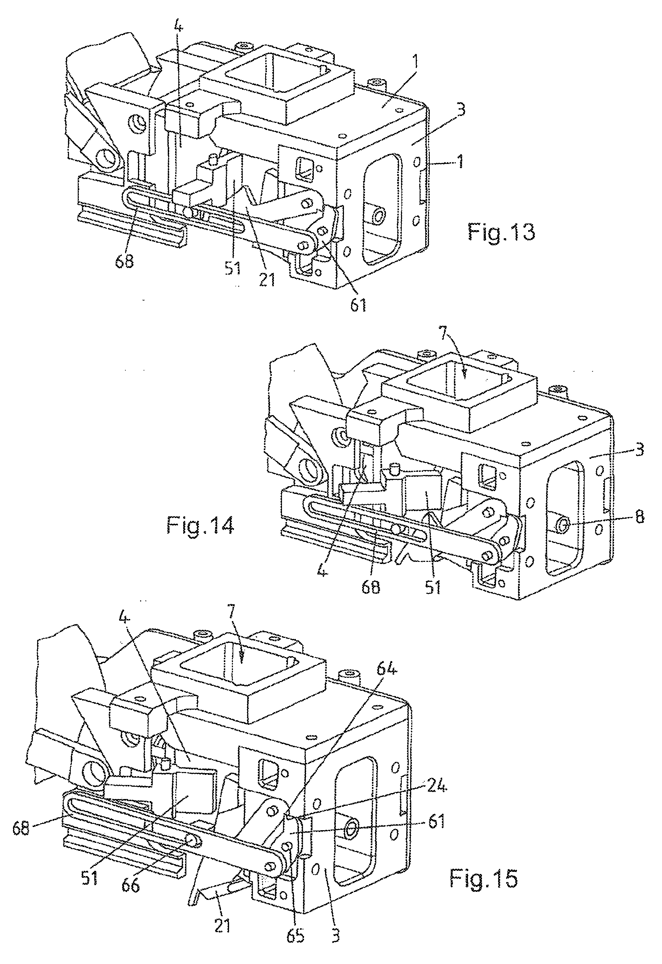

**Figur 10** zeigt das angeschnittene alternative Brühmodul in Ansicht ohne Kapsel. Deutlich sichtbar sind das Auflageelement 21, welches in dieser Ausgestaltung eine optionale flächige seitliche Führungspartie 22 aufweist, sowie eines der Abstreifelemente 51. Sowohl das Auflageelement 21 als auch die Abstreifelemente 51 sind aufgrund der Wirkung von zugeordneten Federn in der in Fig. 10 dargestellten Stellung/Orientierung. **Figur 11** zeigt das Brühmodul mit ebenfalls geschnitten dargestellter, durch die Einwurföffnung eingeworfener Kapsel 10. Zum Brühen des Getränks wird die Brühkammer geschlossen. Zu diesem Zweck wird - bspw. ebenfalls durch Betätigen eines Bedienhebels - das erste Brühmodulteil relativ zum zweiten Brühmodulteil verschoben; hier wird der Injektor 4 in Richtung Ausleitvorrichtung 3 gefahren. **Figur 12** zeigt das Brühmodul während dieser Bewegung. **Figur 13** zeigt wie die nachfolgenden Figuren eine Ansicht des nicht geschnitten dargestellten Brühmoduls von einer anderen Seite her, (im Vergleich zur Orientierung gemäss Fig. 13 um ca. 180° um eine vertikale Achse gedreht) wobei Teile des äusseren Gehäuses weggelassen sind. Die Abstreifelemente 51 befinden sich nach wie vor in der nicht verschwenkten Ausgangsposition. In **Figur 14** ist die Brühkammer fast und in **Figur 15** ganz geschlossen. Die um eine vertikale Achse schwenkbar gelagerten Abstreifelemente 51 werden durch den heranfahrenden Injektor entgegen der Federkraft zur Extraktionsseite hin und nach aussen weggeschwenkt. Eine optionale über die Schwenkachse nach aussen ragende Partie dient hier der Befestigung der Feder; dafür gibt es auch andere Lösungen, bspw. die Verwendung einer koaxial mit der Schwenkachse gelagerten Spiralfeder, eine Blattfeder, eine innenseitig befestigte Schraubenfeder, etc.

In Figur 15 sieht man auch, wie auch das Auflageelement durch das Heranfahren des Injektors weggeschwenkt wurde, und zwar nach unten und zur Extraktionsseite hin. Das Rückhalteelement 61 ist hier ein um einen Rückhalteelement-Drehzapfen 65 schwenkbares Plättchen mit einer Retentionspartie 64, welche in eine entsprechend ausgeformte Aufnahmeausnehmung 24 des Auflageelements 21 einrastet, wenn dieses in seine Ruhestellung verschwenkt ist. Eine entsprechend vorgespannte Feder verschwenkt das Rückhalteelement in diese Orientierung.

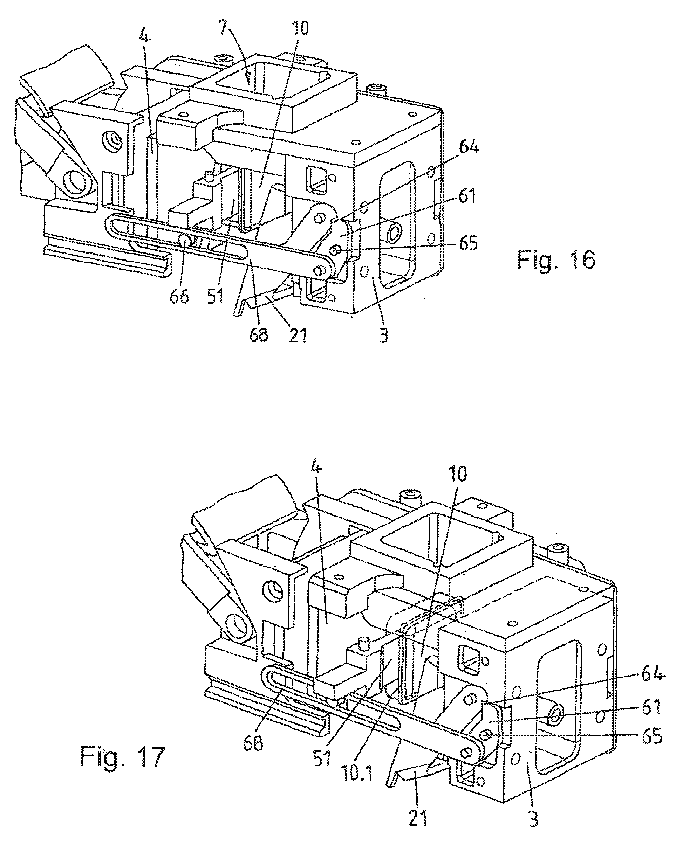

Beim Öffnen der Brühkammer wird wie in **Figur 16** sichtbar zunächst das Auflageelement 21 durch das Rückhalteelement 61 in der Ruhestellung gehalten, weil es mit diesem verrastet bleibt. Durch das Wegbewegen des Injektors können die Abstreifelemente 51 aufgrund der Federkraft zurück nach innen klappen und liegen mit ihrer innenseitigen Kante an der Kapsel 10 an. Beim weiteren Wegbewegen des Injektors halten die Abstreifelemente 51 die Kapsel zurück (**Figur 16**), so dass dieses, sobald der Injektor für sie keine ausreichende Auflage mehr darstellt, nach unten in den Kapselbehälter fallt.

Die Rückhaltewirkung der Abstreifelemente beruht in der Figur 16 dargestellten Variante auf der Kombination eines Anstehens an einer umlaufenden Schweissnaht der Kapsel (wie sie im Trennschweiss-Verfahren entstanden ist, was in der WO 2010/118543 beschrieben ist) und von Reibungskräften. Die Ausführungsform von Figuren 1-6 und 9 sieht vor, dass die Abstreifelemente so dimensioniert sind, dass sie beim Anstehen an der Kapsel nicht vollständig nach innen geklappt sind, sondern in einem Winkel zur radialen Richtung verbleiben. So kommt es (auch) zu einem Verklemmen, eventuell in Kombination mit einem Anstehen an einer Verstärkung (Schweissnaht; Kragen). In **Figur 17** sieht man das Anstehen der umlaufenden Schweissnaht 10.1 am Abstreifelement noch etwas deutlicher.

**Figur 18** zeigt das Brühmodul mit ganz geöffneter Brühkammer. Die Kapsel ist nach unten in den Kapselbehälter gefallen und nicht mehr sichtbar. Das Zurückbewegen des Auflageelements 21 in die Auflagestellung wird in der Ausführungsform von Fig. 11-19 wie folgt ausgelöst. Ein als die Auslösepartie dienender Auslösezapfen 66, der am Injektor befestigt oder ausgeformt ist, ist in einer länglichen Ausnehmung (Langloch) 69 eines Auslöseelements 68 geführt. Das Auslöseelement 68 ist am einen extraktionsseitigen Ende mit dem Rückhalteelement 61 verbunden. Beim vollständigen Öffnen der Brühkammer stösst der Auslösezapfen am injektorseitigen Ende des Langlochs 69 an und zieht das Auslöseelement etwas mit, so dass dieses das Rückhaltelement 61 entgegen der Federkraft verkippt und so die Rastverbindung mit dem Auflageelement löst. Dieses schwenkt zurück in die Auflagestellung.

**Figur 19** zeigt noch Elemente des Brühmoduls mit geöffneter Brühkammer, wobei die relative Positionierung von Auflageelement 21, Abstreifelementen 51 und Ausleitvorrichtung 3 besonders gut sichtbar wird.

Ein Extraktionsgerät, insbesondere eine Kaffeemaschine mit einem Brühmodul weist, wie in **Figur 20** schematisch dargestellt, nebst dem Brühmodul einen Wassertank 71, eine Pumpe 72 zum Zuführen von Brühwasser zum Injektor 4 und eine Wasserheizungsvorrichtung 73 (bspw. Durchlauferhitzer) auf. Unterhalb des Brühmoduls ist ein Kapselbehälter 75 angeordnet, in welchen die Kapseln 10 nach dem Brühprozess fallen bzw. transportiert werden.

Das Zuführen des aufgeheizten Wassers zum Injektor 4 erfolgt über flexible Wasserleitungsabschnitte (Schläuche) und über Zuführkanäle. Die Kaffeemaschine weist weiter bspw. einen unterhalb der Brühkammer angeordneten Kapselbehälter 75 auf, in welchen die Kapsel nach dem Brühvorgang durch Anheben des Bedienhebels 5 selbsttätig ausgeworfen wird.

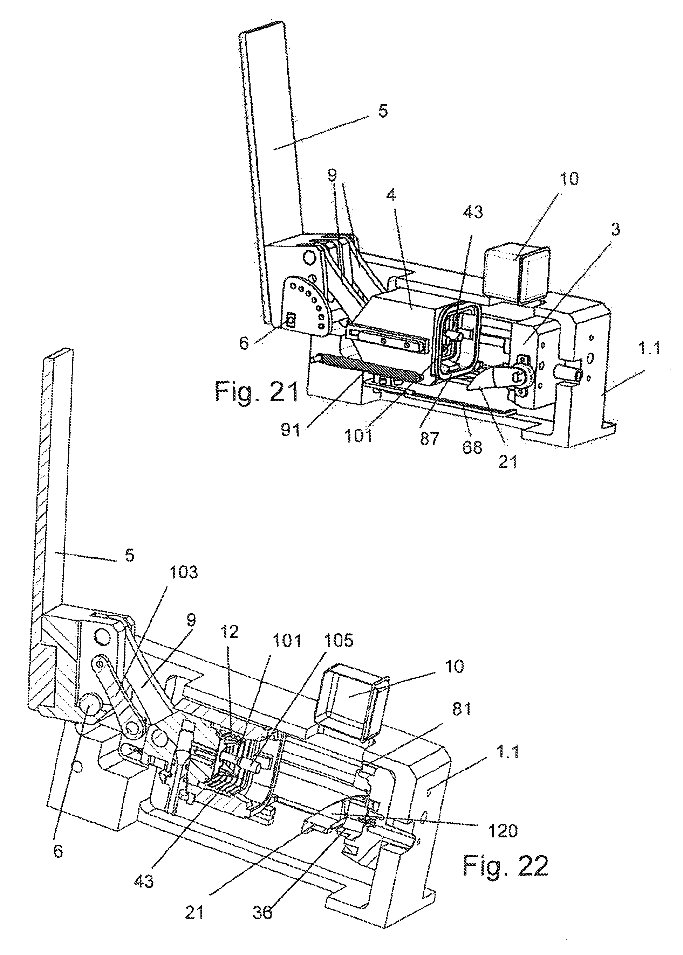

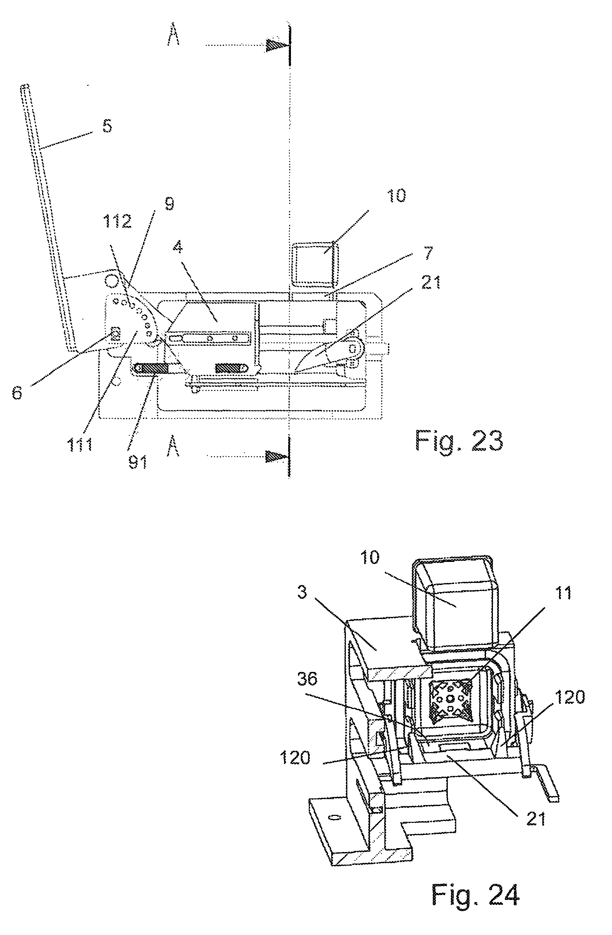

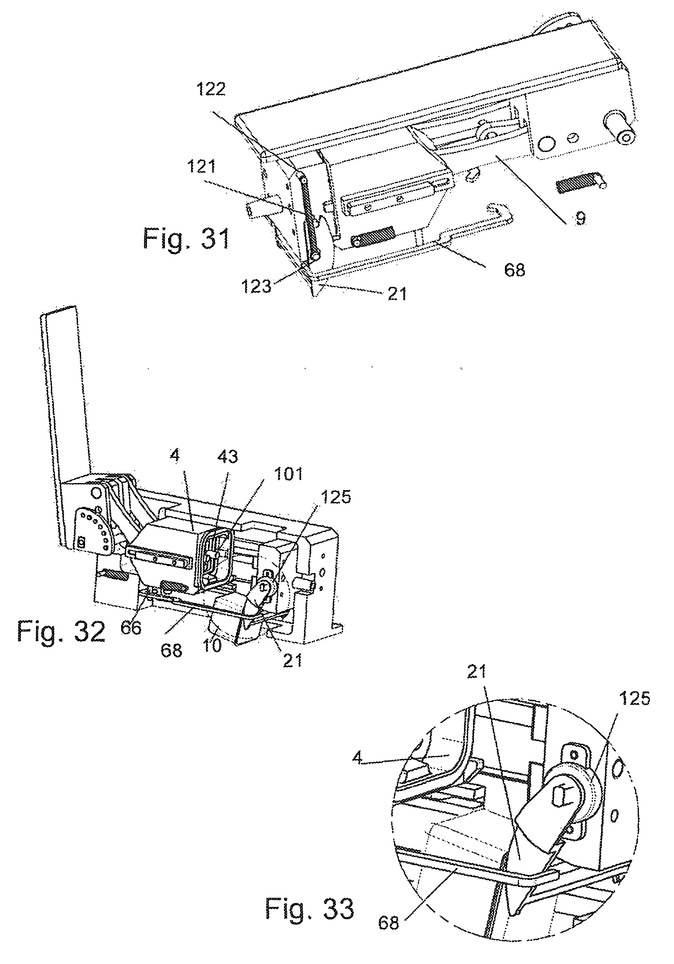

Eine weitere Ausführungsform eines Brühmoduls - bspw. für eine Kaffeemaschine gemäss Fig. 20 - ist in **Figuren 21-33** dargestellt. Die nachfolgende Beschreibung betrifft insbesondere die Unterschied zur Ausführungsform der Figuren 1-9. Diese Merkmale, durch welche sich die dritte Ausführungsform von den ersten beiden Ausführungsformen unterscheidet, wirken unabhängig voneinander, auch wenn sich ihre Vorteile auf günstige Weise ergänzen. Die Merkmale können daher einzeln oder (wie in der beschriebenen Ausführungsform) in Kombinationen oder in beliebigen Unterkombinationen realisiert werden:
- Eine Brühmodul-Rückstellfeder 91 (bzw. beidseitig des Injektors 4 angebracht je eine Rückstellfeder) wird durch das Verschliessen der Brühkammer gespannt. Dadurch übt sie eine Rückstellkraft aus, welche beim Wiederöffnen die Betätigung erleichtert. In Fig. 21 ist die Brühmodul-Rückstellfeder 91 ganz dargestellt, in den nachfolgenden Figuren nur die beiden Enden der Feder.
- Das Brühmodul weist keine extraktionsseitige elastomere Kapseldichtung auf. Vielmehr wird extraktionsseitig dadurch abgedichtet, dass das Kapselinnere während des Brühprozesses unter Druck steht und die Kapselwandung weich wird, wodurch sie flächig gegen die entsprechende Fläche der Ausleitvorrichtung gedrückt wird. Das aus der Kapsel ausgeleitete Brühgetränk kann zu einem Auslass hin aus dem Extraktionsgerät abfliessen; daher besteht zwischen dem aus der Kapsel ausgetretenen Brühgetränk und dem Umgebungsdruck keine (zumindest keine wesentliche) Druckdifferenz. D.h., die ausgeleitete Brühflüssigkeit steht nicht mehr unter Druck. Aus diesem Grund reicht das flächige Anstehen der Kapselwandung an der entsprechenden Fläche der Ausleitvorrichtung aufgrund des Kapsel-Innendrucks für eine ausreichende Dichtwirkung.
- Das Brühmodul weist kein Abstreifmittel auf. Vielmehr wird die Kapsel nach dem Brühprozess ausgestossen. Dies geschieht durch Ausstosser 101, welche in der Art von Kolben relativ zum Injektor 4 axial verschiebbar sind, und deren Enden beim Öffnen der Brühkammer relativ zum Injektor 4 ins Brühkammerinnere geschoben werden, so dass sie die Kapsel ausstossen. Der Mechanismus für die Betätigung wird nachstehend noch eingehender beschrieben.
- Das Auflageelement 21 weist seitliche Führungen 120 auf, welche beidseits von der Auflagefläche nach oben ragen. In der gezeichneten Ausführungsform sind sie leicht pyramidal ausgestaltet, so dass die Aufnahme für die Kapsel sich leicht konisch gegen unten verengt, was die Kapsel beim Einwurf in Bezug auf seitliche Richtungen zentriert (siehe insbesondere Fig. 24.
- Das Auflageelement 21 wird durch eine Feder 121 in der Auflagestellung und der Ruhestellung - je an einem Anschlag anstehend - gehalten, wobei die Feder durch die Bewegung von der Auflagestellung in die Ruhestellung über einen Totpunkt weg bewegt wird. Dadurch kann ein separates Rückhalteelement entfallen. Die Feder ist hier eine Zugfeder, die oberhalb des Auflageelements am Gehäuse der Ausleitvorrichtung 3 sowie an der Ausleitvorrichtung befestigt (Befestigungszapfen 122, 123) und so angeordnet ist, dass der Befestigungspunkt am Auflageelement beim Schliessen der Brühkammer axial über den Ort der Befestigung an der Ausleitvorrichtung hinaus bewegt wird (Überschreiten des Totpunktes). Diesen Mechanismus sieht man am besten in Fig. 31. Das Auslöseelement 68 kann dann wie vorliegend als einfacher Bügel ausgeformt sein, welcher beim Öffnen des Brühmoduls von einer Mitnahmepartie 66 (Zapfen) des bewegten Brühmodulteils mitgenommen wird und das Auflageelement 21 über den Totpunkt zurückzieht.
- Das Auflageelement ist mit einem Rotationsdämpfer 125 versehen, welcher ein langsames Zurückbewegen anstelle eines Zurückschnappens sicherstellt.
- Der Auflagevorsprung 36 der Ausleitvorrichtung ragt in Richtung Injektionsseite über die Brühkammerdichtung 81 (bzw. wenn die Brühkammerdichtung injektionsseitig angebracht ist, über die Fläche, an welcher die Brühkammerdichtung ansteht) hinaus. Das ermöglicht, dass die Dichtung ungefähr vertikal angeordnet ist und nicht wie in den vorstehenden Ausführungsformen entlang einer geneigten Ebene verlaufen muss, damit dem Kapseleinwurf nichts im Wege steht. Die Brühkammerdichtung ist hier als elastomere Flächendichtung ausgebildet.
- Das Brühmodul ist mit einem Feinjustiermechanismus ausgestattet, welcher trotz bestehender Fertigungstoleranzen und auch bei Verwendung einer elastomeren Flächendichtung ein präzises Verschliessen der Brühkammer ermöglicht. Dieser Mechanismus sieht vor, dass der Drehzapfen 6 nicht um seine Achse drehsymmetrisch ausgebildet und/oder gelagert sondern bspw. exzentrisch oder elliptisch ist. Durch Drehen einer Justierplatte 111 (siehe bspw. Fig. 23) kann sie relativ zum Bedienhebel 5 gedreht und dann durch eines von mehreren Justierlöchern 112 mittels Stift relativ zu diesem drehfest fixiert werden (dasselbe Prinzip könnte auch auf die Orientierung des Drehzapfens 6 relativ zum Gehäuse angewandt werden). Bei der Endmontage des Brühmoduls wird die Brühkammer verschlossen und die Justierplatte 111 im Zustand, in welchem die Brühkammerdichtung 81 satt an der Gegenfläche ansteht, fixiert. Der Drehzapfen ist hier eine Welle, die mindestens entweder im Bereich, wo sie mit dem Bedienhebel im Eingriff ist oder dort, wo sie mit einem gehäusefesten Teil zusammenwirkt, nicht um ihre Achse drehsymmetrisch ist.

Das letztgenannte Prinzip des Feinjustiermechanismus mit nicht drehsymmetrischem Drehzapfen und/oder nicht drehsymmetrischer Drehzapfenlagerung ist unabhängig von der beanspruchten Erfindung generell in Brühmodulen für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, realisierbar, welches ein erstes Brühmodulteil und ein relativ zu diesem bewegbares zweites Brühmodulteil aufweist, wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die in Kapsel und eine Brühkammer bilden, welche die Kapsel beim Brühvorgang mindestens teilweise umgibt und die durch Bewegen des zweiten Brühmodulteils relativ zum ersten Brühmodulteil von einem offenen in einen geschlossenen Zustand bringbar ist, wobei das erste und/oder das zweite Brühmodulteil Anstechspitzen zum Anstechen der Kapsel durch Durchstossen einer Kapselwand aufweist.

Figuren 21-24 zeigen das Brühmodul bzw. Teile davon im gehöffneten Zustand beim Einwerfen der Kapsel. In diesem Zustand ragen die Ausstosser 101 in den Raum hinein, welcher von der injektionsseitigen Dichtung 43 gebildet wird und im geschlossenen Zustand die Brühkammer bilden wird. Beim Einwerfen wird die Kapsel durch die seitlichen Führungen zentriert und positioniert.

Wie man in Fig. 22 besonders gut sieht, ist nebst den Pleueln 9 zum Umsetzen der Bedienhebel 5 -Schwenkbewegung in eine axiale Bewegung des Injektors 4 auch ein Ausstosser-Pleuel 103 vorhanden. Dieser ist am Bedienhebel 5 an einem näher bei der Schwenkachse (definiert durch den Schwenkzapfen 6) als der Befestigungspunkt der Pleuel 9 liegenden Punkt befestigt. Dadurch werden die Ausstosser 101 bei einer Schwenkbewegung des Bedienhebels ebenfalls in der Bewegungsrichtung des Injektors mitbewegt, aber langsamer und damit letztlich um eine kürzere Wegstrecke.

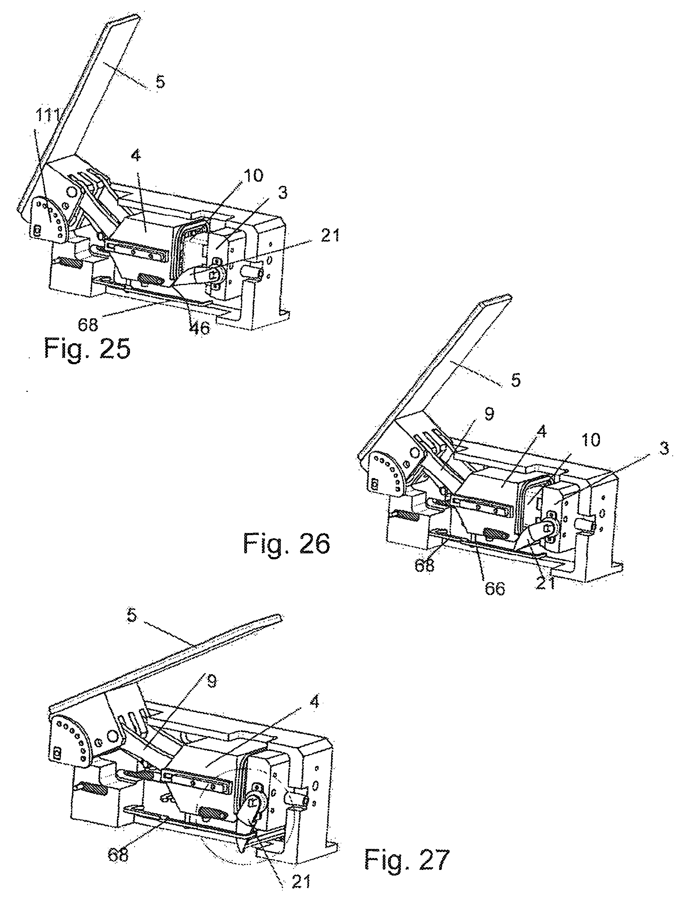

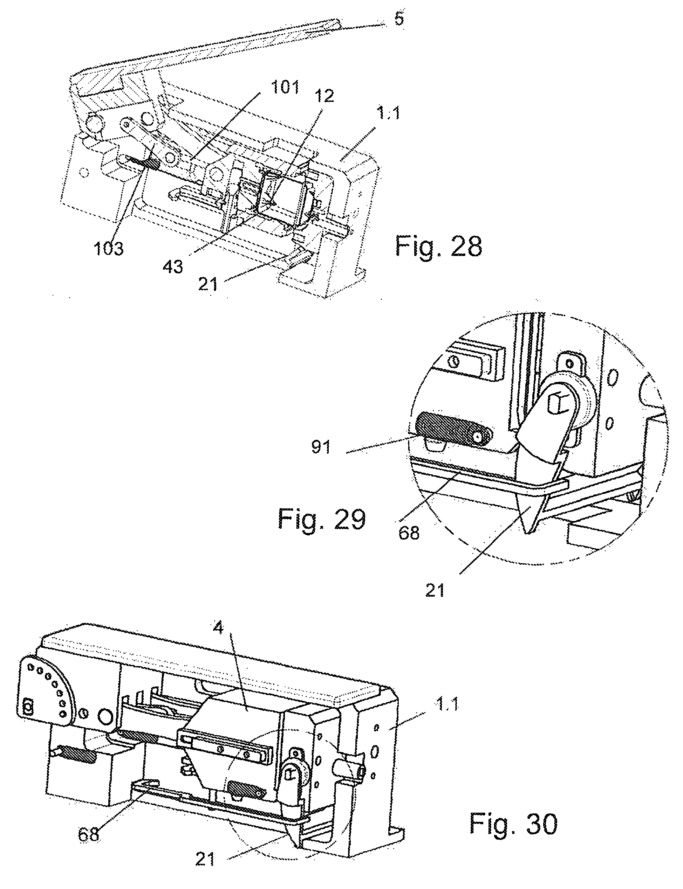

Figuren 25-27 zeigen das Brühmodul in fortlaufenden Stadien des Schliessvorgangs. Man sieht, wie eine rampenartige Betätigungsfläche 46 des Injektors das Auflageelement 21 weg von der Auflagestellung drückt. Das Rückhalteelement 68 ist axial frei beweglich und wird wenn nötig mitbewegt (Fig. 27, Fig. 29).

Die Geometrie der Anordnung ist so gewählt, dass im geschlossenen Zustand die Ausstosser 101 ganz aus der Brühkammer zurückgezogen sind.

Im hier gezeichneten Ausführungsbeispiel weisen die Ausstosser (siehe insbesondere Fig. 22) vorderseitig eine Kopfpartie 105 mit etwas vergrössertem Durchmesser auf, an deren Rückseite eine - in den Figuren nicht gezeichnete - umlaufende Dichtung vorhanden sein kann, welche gegen im relativ zum Injektor 4 zurückgezogenen Zustand der Ausstosser gegen eine im Innern des Injektors angeordnete Schulter gedrückt wird und so abdichtet.

In Fig. 28 sieht man, wie beim Verschliessen der Brühkammer die Kapsel mindestens injektionsseitig durch die Anstechspitzen 12 angestochen wird.

Im geschlossenen Zustand (Fig. 30 und 31) wird das Auflageelement aufgrund des vorstehend beschriebenen Mechanismus durch die Feder 121 in der Ruhestellung gehalten, während der Brühvorgang stattfinden kann.

Beim Öffnen der Brühkammer (Fig. 32 und 33) wird zunächst die Kapsel aus der sie umgreifenden injektorseitigen Kapseldichtung 43 ausgestossen, indem die Ausstosser 101 um eine kürzere Strecke zurückgezogen werden als der Injektor und also relativ zu diesem in die Brühkammer hinein verschoben werden. Die Ausstosser sind so dimensioniert und der Ausstosser-Pleuel 103 so angeordnet, dass die Kapsel ganz aus der injektorseitigen Kapseldichtung 43 gelöst wird und nach unten fällt, bevor das Brühmodul ganz geöffnet ist. Erst am Ende der Öffnungsbewegung wird der Mitnahmezapfen 66 des Injektors das Auslöseelement (Bügel) 68 mitnehmen und das Auflageelement über den Totpunkt zurückziehen, worauf die Feder 121 es in die Auflagestellung zurück bewegt. Der Rotationsdämpfer 125 verhindert ein sofortiges Zurückschnellen in die Auflagestellung, wodurch sichergestellt ist, dass auch bei sehr raschem Öffnen des Brühmoduls das Auflageelement nicht wieder in der Auflagestellung sein kann, bevor die Kapsel nach unten gefallen ist.

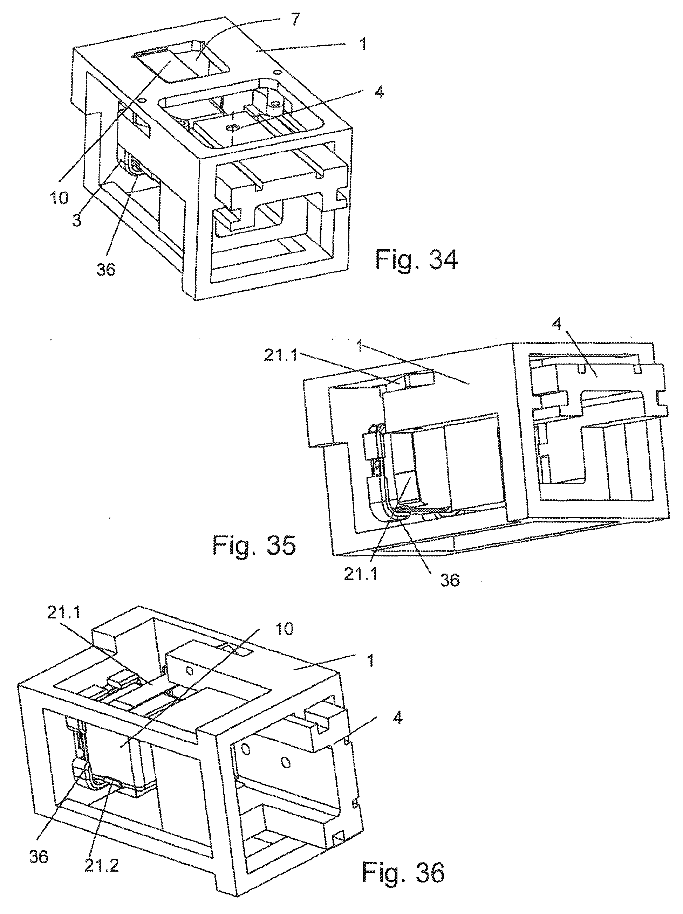

Figuren 34-39 zeigen eine Ausführungsform eines Brühmoduls (ohne Bedienhebel und Ausstoss-/Auswurfmechanismus dargestellt), bei welcher das Auflageelement 21 zweiteilig ist. Es weist ein erstes Auflageelement-Teil 21.1 und ein zweites Auflageelement-Teil 21.2 auf. Figuren 34-36 zeigen das Brühmodul im geöffenten Zustand der Brühkammer, in welchem die Kapsel eingeworfen werden kann bzw. eingeworfen ist. In Figur 35 und insbesondere in der Ansicht gemäss Fig. 36, welche das Brühmodul auf die Seite gekippt darstellt, sieht man, wie die Auflageelement-Teile 21.1, 21.2 als seitlich der Kapsel verlaufende Bügel mit einer die Kapsel untergreifenden Endpartie ausgebildet sind.

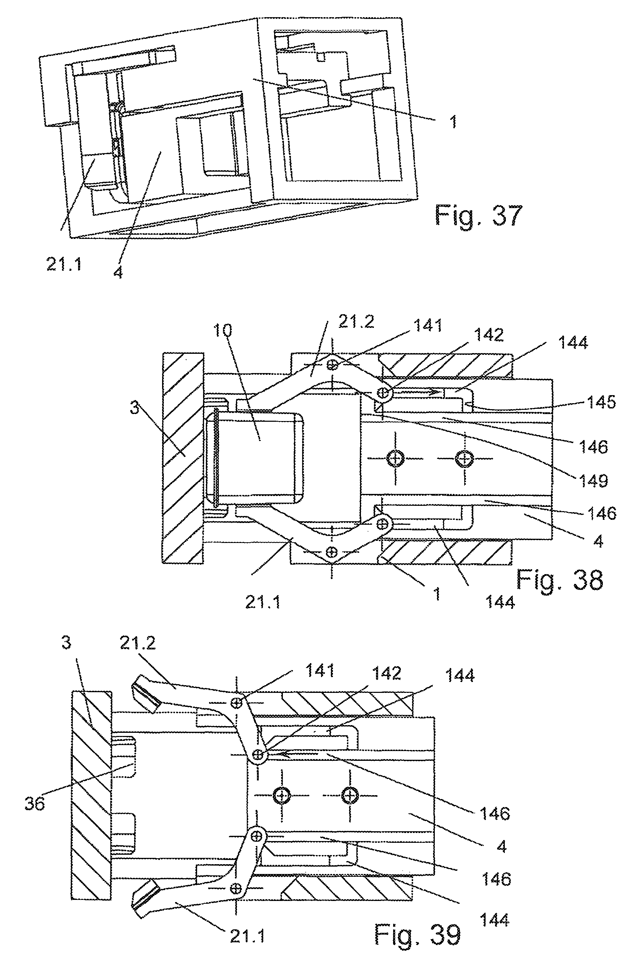

Figur 37 zeigt das Brühmodul im geschlossenen Zustand der Brühkammer, in welcher das Auflageelement in seiner Ruhestellung ist, indem die beiden Auflageelement-Teile nach aussen weggeschwenkt sind. Zu diesem Zweck weisen die Auflageelement-Teile nebst dem seitlich der Kapsel verlaufenden Bügel mit Endpartie auch eine hier im Wesentlichen horizontale Schwenkhebel-Partie auf. Wie man in Figuren 38 und 39 besonders gut sieht, sind die Schwenkhebel-Partien durch einen gehäusefesten Schwenkstift 141 schwenkbar am Gehäuse 1 befestigt.

Die Bewegung der Auflageelement-Teile 21.1, 21.2 wird durch die Führung eines Führungsstifts 142 in einer Kulisse des zweiten Brühmodulteils (des Injektors 4) bewirkt. Für jedes der beiden Auflageelement-Teile ist hier in einer spiegelbildlichen Anordnung je eine Kulisse vorhanden. Die Kulissen beinhalten eine äussere Führungsnut 144 und eine innere Führungsnut 146.

Beim Schliessen der Brühkammer (Fig. 38, durch Verschieben des Injektors 4 in der Figur nach links) wird der Führungsstift 142 in der äusseren Führungsnut 144 geführt und dadurch das entsprechende Auflageelement-Teil 21.1, 21.2 in der Auflagestellung gehalten. Zum Ende der Schliessbewegung hin wird der Injektor an den Auflageelement-Teilen anstossen, wobei gleichzeitig der Führungsstift an einem ersten Anschlag 145 der Kulisse anstehen kann. Der Verlauf der Kulisse ermöglicht jedoch wie in Fig. 38 sichtbar an dieser Stelle ein Ausweichen des Führungsstifts 142 gegen innen wodurch die Auflageelement-Teile 21.1, 21.2 nach aussen weggeschwenkt werden.

Beim erneuten Öffnen der Brühkammer (Fig. 39; Injektor 4 wird nach rechts zurück verschoben) wird der Führungsstift in der inneren Führungsnut 146 bleiben, bis der Führungsstift an einem zweiten Anschlag 149 ansteht. Durch das weitere Zurückziehen des Injektors 4wird der Führungsstift nach 'hinten' (d.h. zur Injektorseite hin) mitgenommen, was ein Verschwenken des Auflageelement-Teils 21.1, 21.2 nach innen unter gleichzeitigem Gleiten des Führungsstifts 142 nach aussen bewirkt. Das Brühmodul ist wieder für einen Kapseleinwurf bereit, und beim erneuten Verschliessen ist der Führungsstift gemäss Fig. 38 wieder in der äusseren Führungsnut 144 geführt.

Die Ausführungsform der Figuren 34-39 ist gleichzeitig auch ein Beispiel für ein Brühmodul, bei welchem das Auflageelement ohne Feder bewegt werden kann.

Durch die Verschwenkbarkeit der Auflageelement-Teile zur Seite hin ermöglicht diese Ausführungsform ausserdem eine relativ enge seitliche Führung der Kapsel, ohne dass beim Öffnen der Brühkammer störende Reibungskräfte auftreten würden.

Die anhand der Ausführungsformen beschriebenen Merkmale des Auflageelements und des entsprechenden Betätigungsmechanismus und die Merkmale der Abstreifelemente und des entsprechenden Mechanismus können unabhängig voneinander implementiert und variiert werden, wobei auch Ausführungsformen mit einer direkten Verbindung zwischen diesen Elementen denkbar sind. Ein Zusammenwirken zwischen Auflageelement und Abstreifelementen besteht dadurch, dass das Auflageelement ggf. vorzugsweise in der Ruhestellung sein sollte, wenn die Abstreifelemente mit der Kapsel in Eingriff kommen.

## Patentansprüche

1. Brühmodul für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, aufweisend ein erstes Brühmodulteil (3) und ein relativ zu diesem bewegbares zweites Brühmodulteil (4), wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die in Kapsel und eine Brühkammer bilden, welche die Kapsel beim Brühvorgang mindestens teilweise umgibt und die durch Bewegen des zweiten Brühmodulteils relativ zum ersten Brühmodulteil von einem offenen in einen geschlossenen Zustand bringbar ist, wobei das erste und/oder das zweite Brühmodulteil Anstechspitzen zum Anstechen der Kapsel durch Durchstossen einer Kapselwand aufweist, wobei das Brühmodul ferner ein Auflageelement (21) aufweist, welches, wenn die Brühkammer im offenen Zustand ist, in einer Auflagestellung eine Unterlage für die Kapsel bildet und welches durch Verschliessen der Brühkammer von der Auflagestellung weg in eine Ruhestellung bewegbar ist, wobei die Bewegung des Auflageelements von der Auflagestellung in die Ruhestellung in einer von der Bewegungsrichtung des zweiten Brühmodulteils relativ zum ersten Brühmodulteil verschiedenen Richtung erfolgt, wobei Brühmodul so ausgebildet ist, dass die Kapsel nach Einwurf über eine definierte Einwurfposition auf dem Auflageelement (21) und einer Auflagepartie (36) des ersten Brühmodulteils (3) aufliegt, welche zusammen eine Auflage bilden, die den Schwerpunkt der Kapsel stützt und wobei das Auflageelement (21) so mit den anderen Brühmodulteilen zusammenwirkt, dass es beim Öffnen der Brühkammer erst in die Auflagestellung zurückbewegt wird, wenn die Brühkammer bis zu einem vorbestimmten Mass geöffnet ist, wobei dieses Mass so gewählt ist, dass die Brühkammer beim Bewegen des Auflageelements in die Auflagestellung während des Öffnungsvorgangs weiter geöffnet ist als beim Bewegen des Auflageelements von der Auflagestellung weg beim Schliessvorgang.

2. Brühmodul nach Anspruch 1, **dadurch gekennzeichnet, dass** das Auflageelement beim Bewegen von der Auflagestellung in die Ruhestellung nach unten bewegt wird.

3. Brühmodul nach einem der vorangehenden Ansprüche, **dadurch gekennzeichnet, dass** das zweite Brühmodulteil (4) ein Greifelement aufweist welches die Kapsel umgreift, wenn die Brühkammer geschlossen wird, wobei das Greifelement durch eine gummielastischen und/oder elastomeren Kapseldichtung (43) mit umlaufendem Dichtungskragen gebildet wird.

4. Brühmodul nach einem der vorangehenden Ansprüche, **dadurch gekennzeichnet, dass** das Auflageelement (21) entgegen einer Federkraft von der Auflagestellung weg bewegbar ist und dass es bei der Bewegung in die Ruhestellung über einen Totpunkt der Federkraft hinaus bewegt wird.

5. Brühmodul nach einem der vorangehenden Ansprüche, **dadurch gekennzeichnet, dass** beim Verschliessen der Brühkammer das Auflageelement (21) entgegen einer Federkraft in die Ruhestellung bewegt wird und dort durch eine Rastverbindung gehalten wird, wobei die Rastverbindung durch Öffnen der Brühkammer lösbar ist, wobei vorzugsweise die Rastverbindung zwischen dem Auflageelement (21) und einem bewegbar gelagerten Rückhalteelement (61) besteht und durch eine Auslösepartie (66) des zweiten Brühmodulteils lösbar ist.

6. Brühmodul nach einem der vorangehenden Ansprüche, **gekennzeichnet durch** mindestens ein Kapselabstreifmittel (51), welches beim Öffnen der Brühkammer selbsttätig mit der Kapsel (10) in Eingriff kommen und ein Mitbewegen der Kapsel mit dem zweiten Brühmodulteil bis zum ganz geöffneten Zustand der Brühkammer verhindern, welche Kapselabstreifmittel vorzugsweise von den Seiten radial nach innen ragende, entgegen einer Federkraft vom bewegbaren Brühmodulteil weg und nach aussen umklappbare Teile aufweisen.

7. Brühmodul nach einem der Ansprüche 1-5, **gekennzeichnet durch** mindestens einen relativ im zweiten Brühmodulteil (4) oder im ersten Brühmodulteil axial verschiebbar gelagerten Ausstosser (101), der beim Öffnen der Brühkammer relativ zum zweiten bzw. ersten Brühmodulteil in Richtung des Brühkammerinnern schiebbar ist.

8. Brühmodul nach einem der vorangehenden Ansprüche, **dadurch gekennzeichnet, dass** das erste Brühmodulteil und das zweite Brühmodulteil eine die Kapsel vollständig umschliessende Brühkammer bilden und dass zwischen aneinander stossenden Brühkammerwandungsteilen des ersten und des zweiten Brühmodulteils eine Brühkammerdichtung (81) vorhanden ist.

9. Brühmodul nach einem der vorangehenden Ansprüche, **dadurch gekennzeichnet, dass** das Auflageelement seitliche, von einer Auflagefläche nach oben ragende Führungen (120) aufweist.

10. Brühmodul nach einem der vorangehenden Ansprüche, **dadurch gekennzeichnet, dass** das Auflageelement mindestens zwei in dieselbe oder unterschiedliche Richtungen bewegbare Auflageelement-Teile (21.1, 21.2) aufweist.

11. Brühmodul nach Anspruch 10, **dadurch gekennzeichnet, dass** die Auflageelement-Teile (21.1, 21.2) bzw. zwei der Auflageelement-Teile in je entgegengesetzte Richtungen zur Seite hin schwenkbar sind, wobei die Auflageelement-Teile (21.1, 21.2) beispielsweise je einen seitlich der Kapsel verlaufenden Bügel mit einer die Kapsel von der Seite her untergreifenden Endpartie aufweisen.

12. Brühmodul nach einem der vorangehenden Ansprüche, **gekennzeichnet durch**, eine Kulissenführung zur Führung eines geführten Elements (142) des Auflageelements.

13. Brühmodul nach Anspruch 12, **dadurch gekennzeichnet, dass** die Kulissenführung eine erste Führungsnut (144) und eine parallel zur ersten Führungsnut verlaufende zweite Führungsnut (146) aufweist, wobei das Auflageelement in der Auflagestellung ist, wenn das geführte Element (142) in der ersten Führungsnut (144) geführt ist und in der Ruhestellung ist, wenn das geführte Element (142) in der zweiten Führungsnut (146) geführt ist, und wobei das geführte Element beispielsweise in der ersten Führungsnut geführt ist, während das zweiten Brühmodulteil relativ zum ersten Brühmodulteil in den geschlossenen Zustand bewegt wird und in der zweiten Führungsnut geführt ist, während das zweite Brühmodulteil vom geschlossenen in den offenen Zustand bewegt wird.

14. Extraktionsgerät, beispielsweise Kaffeemaschine, zum portionenweisen Zubereiten eines Getränkes oder anderen Extraktionsprodukts aus einem in einer Kapsel verpackten Extraktionsgut, aufweisend einen Flüssigkeitstank, eine Flüssigkeitspumpe, eine Flüssigkeitsheizungsvorrichtung sowie ein Brühmodul nach einem der vorangehenden Ansprüche, wobei durch den Injektor des Brühmoduls von der Flüssigkeitspumpe geförderte, von durch die Flüssigkeitsheizungsvorrichtung erhitzte Flüssigkeit in eine Kapsel einspritzbar ist.

15. Verfahren zum Zubereiten eines Brühgetränks, aufweisend die Schritte:
- Einwerfen einer Portionenkapsel mit einem Extraktionsgut in eine geöffnete Kammer eines Brühmoduls, so, dass sie mindestens teilweise auf einem sich in einer Auflagestellung befindlichen Auflageelement (21) und gleichzeitig einer Auflagepartie (36) eines ersten Brühmodulteils aufliegt,
- Verschliessen der Brühkammer durch Bewegen eines zweiten Brühmodulteils (4) relativ zum ersten Brühmodulteil (3), derart, dass das Auflageelement durch eine Bewegung in einer von der Bewegungsrichtung des zweiten Brühmodulteils relativ zum ersten Brühmodulteil verschiedenen Richtung von der Auflagestellung weg in eine Ruhestellung bewegt wird und die Kapsel mindestens durch Anstechspitzen (12) eines durch das erste und/oder das zweite Brühmodulteil gebildeten Injektors angestochen wird, wodurch Einleitöffnungen in der Kapsel entstehen;
- Einleiten einer Extraktionsflüssigkeit in die Kapsel durch die Einleitöffnungen;
- Ausleiten der Extraktionsflüssigkeit aus der Kapsel via durch Anstechspitzen (11) erzeugte Ausleitöffnungen, welche Anstechspitzen (11) zu einer durch das erste und/oder das zweite Brühmodulteil gebildeten Ausleitvorrichtung (3) gehören;
- Anschliessend an das Ausleiten, öffnen der Brühkammer durch Bewegen des zweiten Brühmodulteils relativ zum ersten Brühmodulteil bis die Kapsel aus der geöffneten Brühkammer nach unten fallt; und
- Fortsetzen des Öffnens der Brühkammer bis das Zurückbewegen des Auflageelements (21) in die Auflagestellung bewirkt wird, indem das Auflageelement (21) so mit den anderen Brühmodulteilen zusammenwirkt, dass es beim Öffnen der Brühkammer erst in die Auflagestellung zurückbewegt wird, wenn die Brühkammer bis zu einem vorbestimmten Mass geöffnet ist, wobei dieses Mass so gewählt ist, dass die Brühkammer beim Bewegen des Auflageelements in die Auflagestellung während des Öffnungsvorgangs weiter geöffnet ist als beim Bewegen des Auflageelements von der Auflagestellung weg beim Schliessvorgang.

## Claims

1. A brewing module for an extraction apparatus, for example a coffee machine, for preparing portions of a beverage or another extraction product from an extraction material packaged in a capsule, comprising a first brewing module part (3) and a second brewing module part (4) which is movable relative thereto, wherein the first and the second brewing module part form a discharge device for discharging an extraction product from the capsule and an injector for introducing an extraction liquid into the in capsule, and a brewing chamber which at least partially surrounds the capsule during the brewing operation and which can be brought from an open into a closed state by movement of the second brewing module part relative to the first brewing module part, wherein the first and/or the second brewing module part has piercing points for piercing the capsule by puncturing a capsule wall, wherein a support element (21) which, when the brewing chamber is in the open state, forms a base for the capsule in a support position and which, by closure of the brewing chamber, is movable away from the support position into an inoperative position, wherein the movement of the support element from the support position into the inoperative position takes place in a direction different from the direction of movement of the second brewing module part relative to the first brewing module part, and wherein the brewing module is designed in such a manner that, after insertion via a defined insertion position, the capsule rests on the support element (21) and a support portion (36) of the first brewing module part (3), said support element and support portion together forming a support which supports the center of gravity of the capsule, and wherein the support element (21) interacts with the brewing module parts in such a manner that, when the brewing chamber is opened, said support element is moved back into the support position only when the brewing chamber is opened to a predetermined extent, wherein said extent is selected in such a manner that the brewing chamber is opened further when the support element moves into the support position during the opening operation than when the support element moves away from the support position during the closing operation.

2. The brewing module as claimed in claim 1, wherein the support element is moved downward during the movement from the support position into the inoperative position.

3. The brewing module as claimed in claim 1 or 2, wherein the second brewing module part (4) has a gripping element that embraces the capsule when the brewing chamber is closed, wherein the gripping element is formed by a rubber-elastic and/or elastomeric capsule seal (43) with a peripheral sealing collar.

4. The brewing module as claimed in any one of claims 1 to 3, wherein the support element (21) is movable away from the support position counter to a spring force, and wherein said support element is moved beyond a dead center of the spring force during the movement into the inoperative position.

5. The brewing module as claimed in any one of claims 1 to 4, wherein, when the brewing chamber is closed, the support element (21) is moved into the inoperative position counter to a spring force and is held there by a latching connection, the latching connection being releasable by opening of the brewing chamber, wherein the latching connection is preferably between the support element (21) and a movably mounted retaining element (61), and wherein said latching connection is releasable by a release portion (66) of the second brewing module part.

6. The brewing module as claimed in any one of claims 1 to 5, wherein at least one capsule take-off member (51) which, when the brewing chamber is opened, automatically comes into engagement with the capsule (10) and prevents the capsule from being moved together with the second brewing module part until the brewing chamber is completely open., wherein the capsule take-off member preferably has parts which protrude radially inward from the sides and can be folded over away from the movable brewing module part and outward counter to a spring force.

7. The brewing module as claimed in any one of claims 1-5, further comprising at least one ejector (101) that is mounted in an axially displaceable manner relatively in the second brewing module part (4) or in the first brewing module part and, when the brewing chamber is opened, can be pushed in the direction of the brewing chamber interior relative to the second or first brewing module part.

8. The brewing module as claimed in any one of claims 1-7, wherein the first brewing module part and the second brewing module part form a brewing chamber that completely surrounds the capsule, and in that there is a brewing chamber seal (81) between mutually adjoining brewing chamber wall parts of the first and of the second brewing module part.

9. The brewing module as claimed in any one of claims 1 to 8, wherein the support element has lateral guides (120) protruding upward from a support surface.

10. The brewing module as claimed in any one of claims 1 to 9, wherein the support element has at least two support element parts (21.1, 21.2) that are movable in the same or different directions.

11. The brewing module as claimed in claim 10, wherein the support element parts (21.1, 21.2) or two of the support element parts are pivotable toward the side in opposed directions in each case., wherein the support element parts (21.1, 21.2) each have for example a bow that runs at the side of the capsule and has an end portion engaging under the capsule from the side.

12. The brewing module as claimed in any one of claims 1 to 11, further comprising a slotted guide mechanism for guiding a guided element (142) of the support element.

13. The brewing module as claimed in claim 12, wherein the slotted guide mechanism has a first guide groove (144) and a second guide groove (146) running parallel to the first guide groove, wherein the support element is in the support position when the guided element (142) is guided in the first guide groove (144) and is in the inoperative position when the guided element (142) is guided in the second guide groove (146), and wherein the guided element is guided for example in the first guide groove while the second brewing module part is moved relative to the first brewing module part into the closed position, and is guided in the second guide groove while the second brewing module part is moved from the closed state into the open state.

14. An extraction apparatus, for example a coffee machine, for preparing portions of a beverage or another extraction product from an extraction material packaged in a capsule, comprising a liquid tank, a liquid pump, a liquid heating device and a brewing module as claimed in any one of claims 1 to 13, wherein liquid that is delivered by the liquid pump and is heated by the liquid heating device can be injected into a capsule by the injector of the brewing module.

15. A method for preparing a brewed beverage, comprising the following steps:
- inserting a portion capsule with an extraction material into an open chamber of a brewing module such that said portion capsule at least partially rests on a support element (21), which is in a support position, and at the same time on a support portion (36) of a first brewing module part,
- closing the brewing chamber by movement of a second brewing module part (4) relative to the first brewing module part (3) in such a manner that, by a movement in a direction different from the direction of movement of the second brewing module part relative to the first brewing module part, the support element is moved away from the support position into an inoperative position and the capsule is pierced at least by piercing points (12) of an injector formed by the first and/or the second brewing module part, as a result of which introducing openings arise in the capsule;
- introducing an extraction liquid into the capsule through the introducing openings;
- discharging the extraction liquid from the capsule via discharge openings which are produced by piercing points (11), which piercing points belong to a discharge device formed by the first and/or the second brewing module part;
- subsequent to the discharging, opening the brewing chamber by movement of the second brewing module part relative to the first brewing module part until the capsule drops downward out of the open brewing chamber; and
- continuing the opening of the brewing chamber until the movement back of the support element (21) into the support position is brought about by the support element (21) interacting with the brewing module parts in such a manner that, when the brewing chamber is opened, said support element is moved back into the support position only when the brewing chamber is opened to a predetermined extent, wherein said extent is selected in such a manner that the brewing chamber is opened further when the support element moves into the support position during the opening operation than when the support element moves away from the support position during the closing operation.

## Revendications

1. Module d'infusion pour un appareil d'extraction, par exemple une machine à café, pour la préparation portionnée d'une boisson ou d'un autre produit à extraire à partir d'un produit d'extraction emballé dans une capsule, présentant une première partie (3) de module d'infusion et une deuxième partie (4) de module d'infusion mobile par rapport à celle-ci, la première et la deuxième parties de module d'infusion formant un dispositif d'évacuation pour évacuer un produit à extraire de la capsule et un injecteur pour introduire un liquide d'extraction dans la capsule et une chambre d'infusion, qui lors du processus d'infusion entoure au moins en partie la capsule et qui par déplacement de la deuxième partie de module d'infusion par rapport à la première partie de module d'infusion peut être amenée d'une position ouverte dans une position fermée, la première et/ou la deuxième partie de module d'infusion présentant des pointes de perçage pour percer la capsule par perforation d'une paroi de capsule, le module d'infusion présentant par ailleurs un élément d'appui (21) qui lorsque la chambre d'infusion est en position ouverte, dans une position d'appui, forme un support pour la capsule et qui est mobile par fermeture de la chambre d'infusion hors de la position d'appui dans une position de repos, le déplacement de l'élément d'appui de la position d'appui dans la position de repos s'effectuant dans une direction différente de la direction de déplacement de la deuxième partie de module d'infusion par rapport à la première partie de module d'infusion, le module d'infusion étant conçu de telle sorte qu'après introduction via une position d'introduction définie, la capsule repose sur l'élément d'appui (21) et une partie d'appui (36) de la première partie (3) de module d'infusion qui forment ensemble un appui qui soutient le centre de gravité de la capsule et l'élément d'appui (21) coopérant avec les autres parties de module d'infusion de telle sorte que lors de l'ouverture de la chambre d'infusion, il ne soit pas déplacé en arrière dans la position d'appui, lorsque la chambre d'infusion est ouverte jusque dans une certaine mesure, cette mesure étant choisie de sorte que lors du déplacement de l'élément d'appui dans la position d'appui pendant le processus d'ouverture, la chambre d'infusion soit ouverte plus largement que lors du déplacement de l'élément d'appui hors de la position d'appui, lors du processus de fermeture.

2. Module d'infusion selon la revendication 1, **caractérisé en ce que** lors du déplacement de la position d'appui dans la position de repos, l'élément d'appui est déplacé vers le bas.

3. Module d'infusion selon l'une quelconque des revendications précédentes, **caractérisé en ce que** la deuxième partie (4) de module d'infusion présente un élément de préhension lequel enserre la capsule, lorsque la chambre d'infusion est fermée, l'élément de préhension étant formé par un joint (43) de capsule en caoutchouc élastique et/ou élastomère avec un collet d'étanchéité périphérique.

4. Module d'infusion selon l'une quelconque des revendications précédentes, **caractérisé en ce que** l'élément d'appui (21) est mobile à l'encontre d'une force d'un ressort en s'éloignant de la position d'appui et **en ce que** lors du déplacement dans la position d'appui, est déplacé au-delà d'un point mort de la force de ressort.

5. Module d'infusion selon l'une quelconque des revendications précédentes, **caractérisé en ce que** lors de la fermeture de la chambre d'infusion, l'élément d'appui (21) est déplacé dans la position de repos à l'encontre d'une force de ressort et y est maintenu par un assemblage par enclenchement, l'assemblage par enclenchement étant détachable par l'ouverture de la chambre d'infusion, l'assemblage par enclenchement étant formé de préférence entre l'élément d'appui (21) et un élément de retenue (61) logé de manière mobile et étant détachable par une partie de déclenchement (66) de la deuxième partie du module d'infusion.

6. Module d'infusion selon l'une quelconque des revendications précédentes, **caractérisé par** au moins un moyen de retrait de la capsule (51), qui à l'ouverture de la chambre d'infusion entre automatiquement en engagement avec la capsule (10) et empêche un co-déplacement de la capsule avec la deuxième partie du module d'infusion jusqu'à la position d'ouverture complète de la chambre d'infusion, lesquels moyens de retrait de la capsule présentant de préférence des parties saillant à partir des côtés, en direction radiale vers l'intérieur, à l'encontre d'une force de ressort, s'éloignant de la partie mobile du module d'infusion et rabattables vers l'extérieur.

7. Module d'infusion selon l'une quelconque des revendications 1 - 5, **caractérisé par** au moins un expulseur (101) logé en étant déplaçable axialement de manière relative dans la deuxième partie (4) du module d'infusion ou dans la première partie du module d'infusion, l'expulseur qui lors de l'ouverture de la chambre d'infusion est susceptible d'être poussé par rapport à la deuxième ou à la première partie du module d'infusion dans la direction de l'intérieur de la chambre d'infusion.

8. Module d'infusion selon l'une quelconque des revendications précédentes, **caractérisé en ce que** la première partie du module d'infusion et la deuxième partie du module d'infusion forment une chambre d'infusion entourant totalement la capsule et **en ce qu'**entre des parties de parois de la chambre d'infusion adjacentes l'une de l'autre de la première et de la deuxième partie du module d'infusion, un joint (81) de chambre d'infusion est présent.

9. Module d'infusion selon l'une quelconque des revendications précédentes, **caractérisé en ce que** l'élément d'appui comporte des guidages (120) latéraux, saillant vers le haut à partir d'une surface d'appui.

10. Module d'infusion selon l'une quelconque des revendications précédentes, **caractérisé en ce que** l'élément d'appui présente au moins deux parties (21.1, 21.2) d'élément d'appui mobiles dans la même ou dans différentes directions.

11. Module d'infusion selon la revendication 10, **caractérisé en ce que** les parties (21.1, 21.2) de l'élément d'appui ou deux des parties de l'élément d'appui sont susceptibles de pivoter dans des directions opposées, en direction du côté, les parties (21.1, 21.2) de l'élément d'appui présentant par exemple chacune chaque fois un étrier s'écoulant latéralement par rapport à la capsule, avec une partie d'extrémité s'engageant par le dessous à partir du côté de la capsule.

12. Module d'infusion selon l'une quelconque des revendications précédentes, **caractérisé par** un guidage par coulisse pour guider un élément (142) guidé de l'élément d'appui.

13. Module d'infusion selon la revendication 12, **caractérisé en ce que** le guidage par coulisse présente une première rainure (144) de guidage et une deuxième rainure (146) de guidage s'écoulant à la parallèle de la première rainure de guidage, l'élément d'appui étant dans la position d'appui lorsque l'élément (142) guidé est guidé dans la première rainure (144) de guidage et étant dans la position de repos, lorsque l'élément (142) guidé est guidé dans la deuxième rainure (146) de guidage et l'élément guidé étant guidé par exemple dans la première rainure de guidage, pendant que la deuxième partie du module d'infusion est déplacée dans la position fermée, par rapport à la première partie du module d'infusion et est guidée dans la deuxième rainure de guidage, alors que la deuxième partie de module d'infusion est déplacée de la position fermée dans la position ouverte.

14. Appareil d'extraction, par exemple machine à café, pour la préparation portionnée d'une boisson ou d'un autre produit à extraire à partir d'un produit d'extraction emballé dans une capsule, présentant un réservoir d'extraction, une pompe d'extraction, un dispositif de chauffage de liquide, ainsi qu'un module d'infusion selon l'une quelconque des revendications précédentes, par l'injecteur du module d'infusion, du liquide convoyé par la pompe à liquide, chauffé par l'intermédiaire du dispositif de chauffage de liquide, étant injectable dans une capsule.

15. Procédé destiné à préparer une boisson infusée, présentant les étapes :
- Introduction d'une capsule portionnée avec un produit d'extraction dans une chambre ouverte d'un module d'infusion, de sorte qu'elle s'appuie au moins partiellement sur un élément d'appui (21) se trouvant dans une position d'appui et également sur une partie d'appui (36) d'une première partie de module d'infusion,
- Fermeture de la chambre d'infusion par déplacement d'une deuxième partie (4) de module d'infusion par rapport à la première partie (3) du module d'infusion, de sorte que par un déplacement dans une direction différente de la direction de déplacement de la deuxième partie du module d'infusion par rapport à la première partie du module d'infusion, l'élément d'appui soit déplacé hors de la position d'appui dans une position de repos et la capsule soit percée au moins par des pointes de perçage (12) d'un injecteur formé par la première partie et/ou par la deuxième partie du module d'infusion, ce qui donne naissance à des orifices d'introduction dans la capsule ;
- Introduction d'un liquide d'extraction dans la capsule, à travers les orifices d'introduction ;
- Évacuation du liquide d'extraction hors de la capsule, via des orifices d'évacuation créés par des pointes de perçage (11), lesquelles pointes de perçage (11) faisant partie d'un dispositif d'évacuation formé par la première et/ou la deuxième partie du module d'infusion ;
- Suite à l'évacuation, ouverture de la chambre d'infusion, par déplacement de la deuxième partie du module d'infusion par rapport à la première partie du module d'infusion, jusqu'à ce que la capsule tombe vers le bas, hors de la chambre d'infusion ouverte ; et
- Poursuite de l'ouverture de la chambre d'infusion, jusqu'à ce que le déplacement en retour de l'élément d'appui (21) dans la position d'appui soit provoqué, en ce que l'élément d'appui (21) coopère avec les autres parties du module d'infusion de sorte que lors de l'ouverture de la chambre d'infusion, il ne soit pas déplacé en retour dans la position d'appui, lorsque la chambre d'infusion est ouverte jusqu'à une mesure prédéfinie, ladite mesure étant choisie de sorte que lors du déplacement de l'élément d'appui dans la position d'appui, pendant le processus d'ouverture, la chambre d'injection s'ouvre plus loin que lors du déplacement de l'élément d'appui hors de la position d'appui, lors du processus de fermeture.
